(19)

Europäisches
Patentamt
European
Patent Office
Office européen
des brevets

(11) **EP 4 068 495 A1**

(12) **EUROPEAN PATENT APPLICATION**
published in accordance with Art. 153(4) EPC

(43) Date of publication:
**05.10.2022 Bulletin 2022/40**

(21) Application number: **20906288.4**

(22) Date of filing: **23.11.2020**

(51) International Patent Classification (IPC):
**H01M 50/547** (2021.01)    **H02J 7/00** (2006.01)

(52) Cooperative Patent Classification (CPC):
**H01M 4/131; H01M 4/133; H01M 10/0587;**
**H01M 50/531; H01M 50/547; H02J 7/00;**
Y02E 60/10; Y02P 70/50

(86) International application number:
**PCT/CN2020/130899**

(87) International publication number:
**WO 2021/129273 (01.07.2021 Gazette 2021/26)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **25.12.2019 CN 201911359846**

(71) Applicant: **Huawei Technologies Co., Ltd.**
**Shenzhen, Guangdong 518129, (CN)**

(72) Inventors:
 • **LU, Lun**
   **Shenzhen, Guangdong 518129 (CN)**
 • **YANG, Lie**
   **Shenzhen, Guangdong 518129 (CN)**
 • **LIANG, Jiahua**
   **Shenzhen, Guangdong 518129 (CN)**
 • **XU, Fan**
   **Shenzhen, Guangdong 518129 (CN)**
 • **ZHOU, Xiaofeng**
   **Shenzhen, Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **BATTERY AND TERMINAL DEVICE**

(57)    This application provides a battery and a terminal device, and relates to the field of terminal device battery technologies. The battery and the terminal device have a stronger fast charging capability. Specifically, the battery provided in this application and having at least two ports is obtained by winding a first electrode and a second electrode that have a novel structure (for example, a plurality of tabs separately protrude from a first long side and a second long side of an electrode, and the tabs are disposed on a non-edge area). In addition, in the terminal device including the battery, the battery and another charging/discharging component may form at least two charging/discharging links, so that the terminal device can have a stronger fast charging capability, and heat dissipation pressure of each charging/discharging link can be relieved. Moreover, stress inside the battery is evenly distributed, so that interface deterioration of the electrode that is caused by stress unevenness can be alleviated. This effectively reduces a risk of shading and lithium plating generated in a cathode charging/discharging cycle, and improves performance of the battery.

EP 4 068 495 A1

FIG. 2A

CONT.
FROM
FIG. 2A
~

| First electrode material | Second electrode material | -------- Separator |

(c)

FIG. 2B

2

## Description

This application claims priority to Chinese Patent Application No. 201911359846.3, filed with the China National Intellectual Property Administration on December 25, 2019 and entitled "BATTERY AND TERMINAL DEVICE", which is incorporated herein by reference in its entirety.

## TECHNICAL FIELD

Embodiments of this application relate to the field of terminal device battery technologies, and in particular, to a battery and a terminal device.

## BACKGROUND

As functions of a terminal device (for example, a mobile phone or a tablet) become more powerful, power consumption of the terminal device is significantly increased, and consequently a battery of the terminal drains increasingly sooner. However, a conventional battery is charged slowly, and consequently user experience is seriously affected.

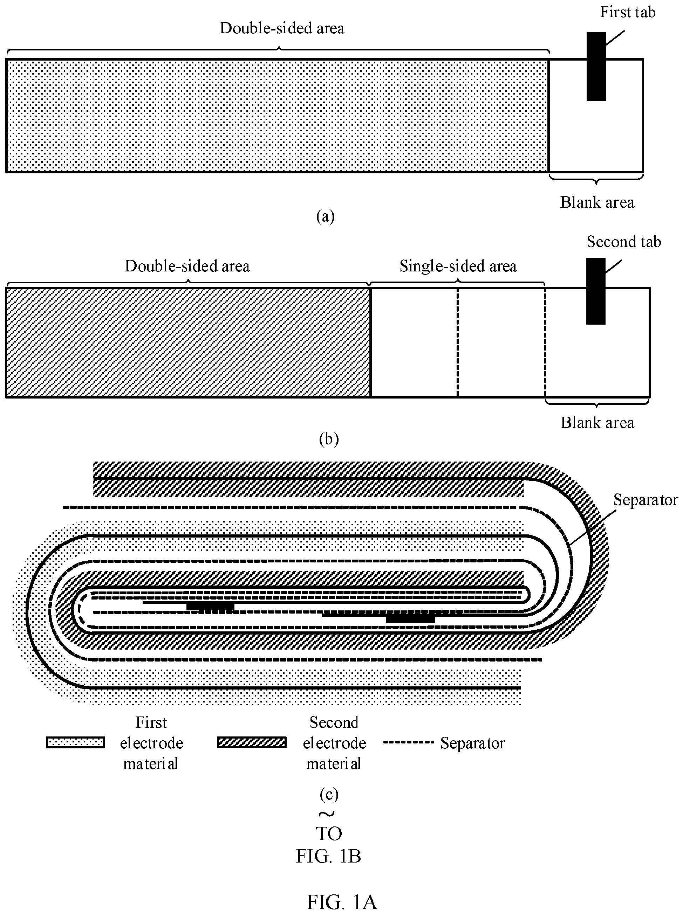

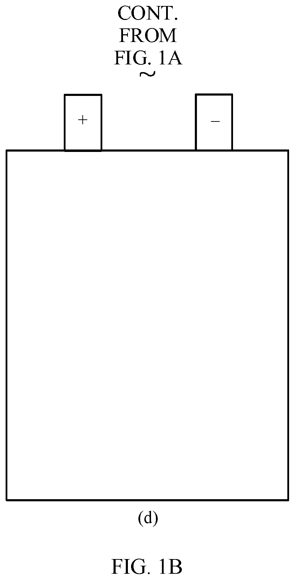

A battery including an electrochemical cell shown in (d) in FIG. 1A and FIG. 1B is used as an example. (c) in FIG. 1A and FIG. 1B is a sectional view of an inner-ring jelly roll of the electrochemical cell shown in (d) in FIG. 1A and FIG. 1B. The jelly roll corresponding to (c) in FIG. 1A and FIG. 1B is obtained by winding a first electrode shown in (a) in FIG. 1A and FIG. 1B and a second electrode shown in (b) in FIG. 1A and FIG. 1B.

A charging speed of the conventional battery shown in (d) in FIG. 1A and FIG. 1B is difficult to continuously increase because of the following two factors: 1. A tab is usually disposed on the right edge of the electrode (as shown in (a) in FIG. 1A and FIG. 1B and (b) in FIG. 1A and FIG. 1B). Consequently, charging current transmission efficiency is low, and the charging speed is slow. 2. The conventional battery has only one first tab (for example, an anode tab) and only one second tab (for example, a cathode tab), and consequently only one charging link can be provided. A capability of one charging link to withstand a large current is limited, and consequently a charging current of the battery cannot be continuously increased. The foregoing two factors cause a bottleneck, where the charging speed of the conventional battery is difficult to continuously increase.

## SUMMARY

This application provides a battery and a terminal device, to increase a fast charging capability, and relieve heat dissipation pressure of a charging/discharging link.

To achieve the foregoing objectives, the following technical solutions are used in embodiments of this application.

According to a first aspect, a battery is provided. The battery includes a multi-tab electrochemical cell, and the multi-tab electrochemical cell is obtained by winding a first electrode, a second electrode, and a separator used to separate the first electrode from the second electrode. The first electrode includes at least one first blank area, and m first tabs are disposed on the at least one first blank area; the second electrode includes at least one second blank area, and n second tabs are disposed on the at least one second blank area; and m and n are positive integers, $m \geq 1$, $n \geq 1$, and m and n are not equal to 1 at the same time. The at least one first blank area and the at least one second blank area each include at least one non-edge blank area. At least two tabs are disposed on at least one of the at least one first blank area and the at least one second blank area, at least one of the at least two tabs protrudes from a first side of a corresponding electrode, and at least one of the at least two tabs protrudes from a second side of the corresponding electrode; and the first side is a first long side of the corresponding electrode, and the second side is a second long side of the corresponding electrode. The blank area is an area in which a current collector is not coated with an electrode material.

According to the technical solution provided in the first aspect, the battery having at least two ports is obtained by winding a first electrode and a second electrode that have a novel structure (for example, a plurality of tabs separately protrude from a first long side and a second long side of an electrode, and the tabs are disposed on a non-edge area). The battery and another charging/discharging component may form at least two charging/discharging links, to increase a fast charging capability, and relieve heat dissipation pressure of each charging/discharging link. Moreover, stress inside the battery is evenly distributed, so that interface deterioration of the electrode that is caused by stress unevenness can be alleviated. This effectively reduces a risk of shading and lithium plating generated in a cathode charging/discharging cycle, and improves performance of the battery.

With reference to the first aspect, in a first possible implementation, the at least one first blank area includes $i_1$ non-edge first blank areas, and the m first tabs are disposed on the $i_1$ non-edge first blank areas; the at least one second blank area includes $j_1$ non-edge second blank areas, and the n second tabs are disposed on the $j_1$ non-edge second blank areas; and $i_1$ and $j_1$ are positive integers. The battery having at least two ports is obtained by winding a first electrode on which a plurality of tabs are disposed in the middle and separately protrude from a first long side and a second long side of an electrode, and a second electrode on which a plurality of tabs are disposed in the middle and separately protrude from a first long side and a second long side of an electrode. The battery and another charging/discharging component may form at least two charging/discharging links, to increase a fast charging capability, and relieve heat dissipation pressure of each charging/discharging link. Moreover, stress inside the battery is evenly distributed, so that interface deterioration of the electrode that is caused by stress unevenness can be alleviated. This effectively reduces a risk of shading and lithium plating generated in a cathode charging/discharging cycle, and improves performance of the battery.

With reference to the first aspect, in a second possible implementation, the at least one first blank area includes $i_2$ non-edge first blank areas, the m first tabs are disposed on the $i_2$ non-edge first blank areas, and $i_2$ is a positive integer. The at least one second blank area includes one edge second blank area, and at least one of the n second tabs is disposed on the edge second blank area. The battery having at least two ports is obtained by winding a first electrode on which a plurality of tabs are disposed in the middle and separately protrude from a first long side and a second long side of an electrode, and a second electrode on which at least one tab is disposed on the edge. The battery and another charging/discharging component may form at least two charging/discharging links, to increase a fast charging capability, and relieve heat dissipation pressure of each charging/discharging link. Moreover, stress inside the battery is evenly distributed, so that interface deterioration of the electrode that is caused by stress unevenness can be alleviated. This effectively reduces a risk of shading and lithium plating generated in a cathode charging/discharging cycle, and improves performance of the battery.

With reference to the first aspect, in a third possible implementation, the at least one first blank area includes one edge first blank area, and at least one of the m first tabs is disposed on the edge first blank area. The at least one second blank area includes $j_2$ non-edge second blank areas, the n second tabs are disposed on the $j_2$ non-edge second blank areas, and $j_2$ is a positive integer. The battery having at least two ports is obtained by winding a first electrode on which at least one tab is disposed on the edge, and a second electrode on which a plurality of tabs are disposed in the middle and separately protrude from a first long side and a second long side of an electrode. The battery and another charging/discharging component may form at least two charging/discharging links, to increase a fast charging capability, and relieve heat dissipation pressure of each charging/discharging link. Moreover, stress inside the battery is evenly distributed, so that interface deterioration of the electrode that is caused by stress unevenness can be alleviated. This effectively reduces a risk of shading and lithium plating generated in a cathode charging/discharging cycle, and improves performance of the battery.

With reference to any one of the first aspect, or the first to the third possible implementations of the first aspect, in a fourth possible implementation, the non-edge blank area is disposed between double-sided areas, or between a double-sided area and a single-sided area, or between single-sided areas. The edge blank area is disposed next to a first short side of the electrode or a second short side of the electrode. The single-sided area is an area in which one side of the current collector is coated with the electrode material, and the double-sided area is an area in which both sides of the current collector are coated with the electrode material.

With reference to any one of the first aspect, or the first to the fourth possible implementations of the first aspect, in a fifth possible implementation, the first electrode is an anode electrode, and the second electrode is a cathode electrode.

With reference to any one of the first aspect, the first possible implementation of the first aspect, or the third to the fifth possible implementations of the first aspect, in a sixth possible implementation, the second electrode includes no edge second blank area or single-sided area.

With reference to any one of the first aspect, or the first to the sixth possible implementations of the first aspect, in a seventh possible implementation, a separation layer is disposed inside a first bending area of the first electrode, the separation layer is used to prevent lithium plating, and the first bending area of the first electrode is a position close to a center of the battery that is bent first when the first electrode and the second electrode are wound. The separation layer is disposed inside the first bending area, so that a risk of shading and lithium plating generated in a cathode charging/discharging cycle can be effectively reduced, and performance of the battery can be improved.

With reference to the seventh possible implementation of the first aspect, in an eighth possible implementation, the separation layer is PET tape. The PET tape is disposed inside the first bending area, so that a risk of shading and lithium plating generated in a cathode charging/discharging cycle can be effectively reduced, and performance of the battery can be improved.

According to a second aspect, an electrode winding method is provided. The method includes: bending a second electrode and a separator for the first time to form a first bending area of the second electrode (S1); inserting a first electrode into the first bending area of the second electrode (S2); and the second electrode, the first electrode, and the separator (S3). The first electrode includes at least one first blank area, and m first tabs are disposed on the at least one first blank area; the first electrode includes at least one second blank area, and n second tabs are disposed on the at least one second blank area; and m and n are positive integers, m ≥ 1, n ≥ 1, and m and n are not equal to 1 at the same time. The at least one first blank area and the at least one second blank area each include at least one non-edge blank area. At least two tabs are disposed on at least one of the at least one first blank area and the at least one second blank area, at least one of the at least two tabs protrudes from a first side of a corresponding electrode, and at least one of the at least two tabs protrudes from a second side of the corresponding electrode; and the first side is a first long side of the corresponding electrode, and the second side is a second long side of the corresponding electrode. The blank area is an area in which a current collector is not coated with an electrode material.

According to the technical solution provided in the second aspect, the battery having at least two charging/discharging links is obtained by winding a first electrode and a second electrode that have a novel structure (for example, a plurality of tabs separately protrude from a first long side and a second long side of an electrode, and the tabs are disposed on a non-edge area) in a special winding manner. Therefore, the battery can have a stronger fast charging capability, and heat dissipation pressure of each charging/discharging link can be relieved. Moreover, stress inside the battery is evenly distributed, so that interface deterioration of the electrode that is caused by stress unevenness can be alleviated. This effectively reduces a risk of shading and lithium plating generated in a cathode charging/discharging cycle, and improves performance of the battery.

In a possible implementation, the first electrode and the second electrode have the structure of the first electrode or the second electrode in any one of the first to the eighth possible implementations of the first aspect.

According to a third aspect, a terminal device is provided. The terminal device includes the battery having the structure in any one of the first aspect or the first to the eighth possible implementations of the first aspect.

According to the technical solution provided in the third aspect, in the terminal device including the battery that has at least two ports and that is obtained by winding a first electrode and a second electrode that have a novel structure (for example, a plurality of tabs separately protrude from a first long side and a second long side of an electrode, and the tabs are disposed on a non-edge area), the battery and another charging/discharging component may form at least two charging/discharging links, so that the terminal device can have a stronger fast charging capability, and heat dissipation pressure of each charging/discharging link can be relieved. Moreover, stress inside the battery is evenly distributed, so that interface deterioration of the electrode that is caused by stress unevenness can be alleviated. This effectively reduces a risk of shading and lithium plating generated in a cathode charging/discharging cycle, improves performance of the battery, and improves user experience.

In a possible implementation, the battery includes at least two ports, and each port includes at least one first tab and at least one second tab. A plurality of tabs of a multi-tab battery may form at least two ports, so that the battery and another charging/discharging component can form at least two charging/discharging links for charging/discharging. This improves a fast charging capability of the terminal device.

In a possible implementation, the terminal device includes at least two charging/discharging links. The at least two charging/discharging links of the battery are used for charging/discharging, so that a fast charging capability of the terminal device can be improved.

In a possible implementation, each charging/discharging link includes at least one port, one battery protection circuit, and one battery connection circuit. The battery protection circuit is configured to protect the battery to prevent overcharging and over-discharging. The battery connection circuit is configured to connect the battery to another component inside the terminal device, for example, connect the battery to a mainboard or a subboard.

In a possible implementation, at least one of the at least two charging/discharging links further includes one buck circuit. The buck circuit is configured to perform voltage conversion, to reduce energy loss and improve energy utilization.

## BRIEF DESCRIPTION OF DRAWINGS

FIG. 1A and FIG. 1B are a schematic diagram of a structure of a conventional electrochemical cell, an inner-ring jelly roll, a first electrode, and a second electrode;

FIG. 2A and FIG. 2B are a schematic diagram of a structure of a first electrode, a second electrode, and a jelly roll of an electrochemical cell with four tabs according to an embodiment of this application;

FIG. 3A-1 and FIG. 3A-2 are a schematic diagram of an electrochemical cell with four tabs and a charging/discharging circuit thereof according to an embodiment of this application;

FIG. 3B-1 to FIG. 3B-4 are a schematic diagram of other four charging/discharging circuits of an electrochemical cell with four tabs according to an embodiment of this application;

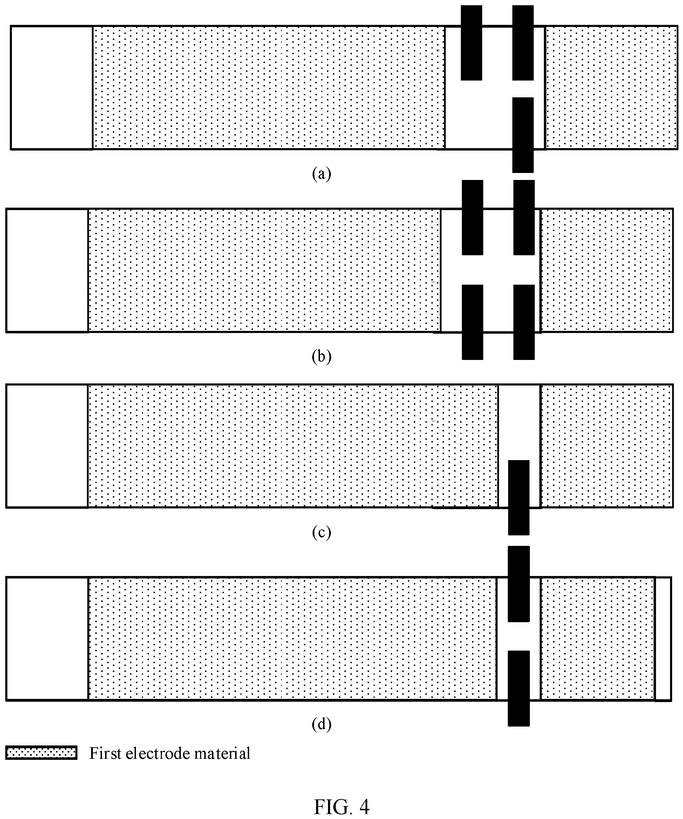

FIG. 4 is a schematic diagram of a structure of four first electrodes according to an embodiment of this application;

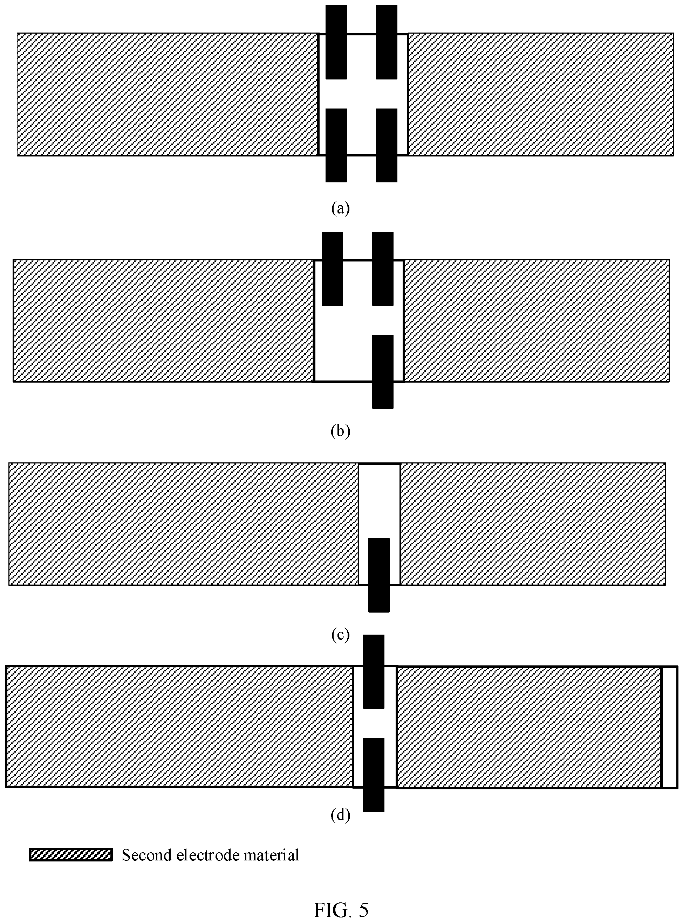

FIG. 5 is a schematic diagram of a structure of four second electrodes according to an embodiment of this application;

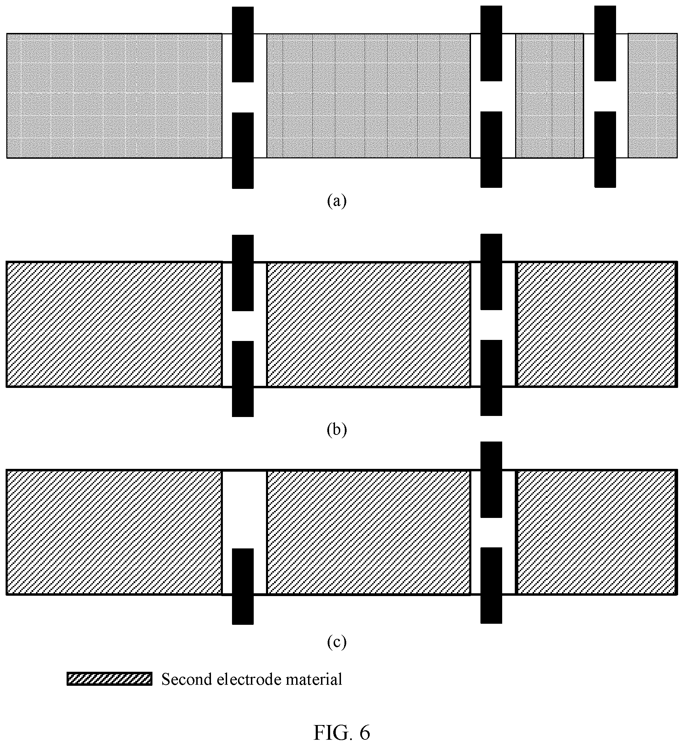

FIG. 6 is a schematic diagram of a structure of other three second electrodes according to an embodiment of this application;

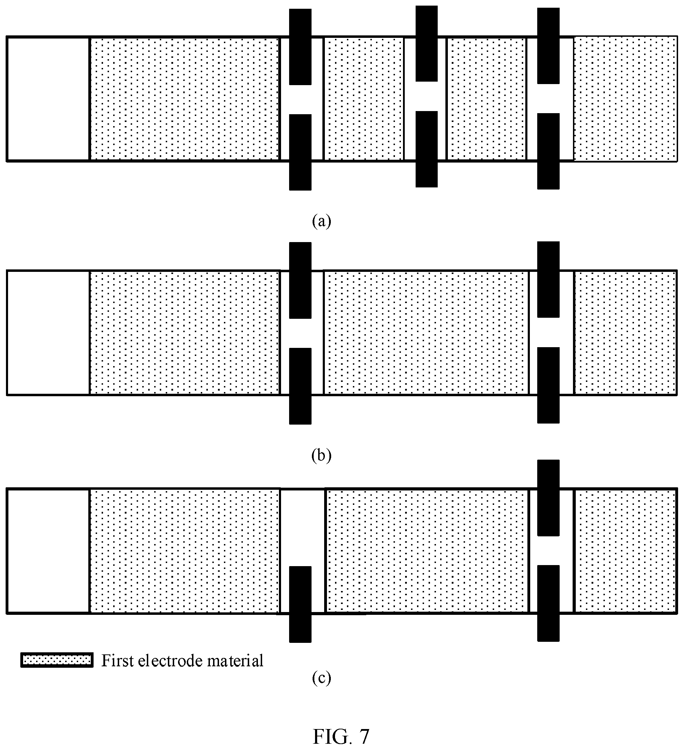

FIG. 7 is a schematic diagram of a structure of other three first electrodes according to an embodiment of this application;

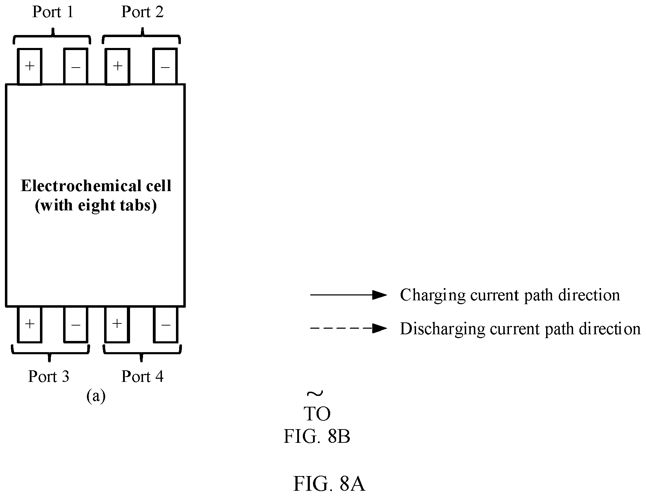

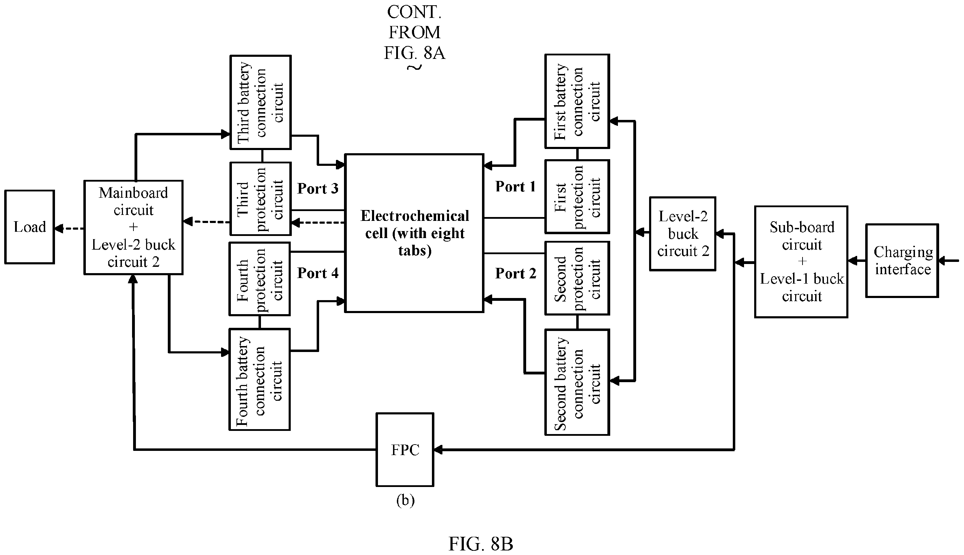

FIG. 8A and FIG. 8B are a schematic diagram of an electrochemical cell with eight tabs and a charging/discharging circuit thereof according to an embodiment of this application;

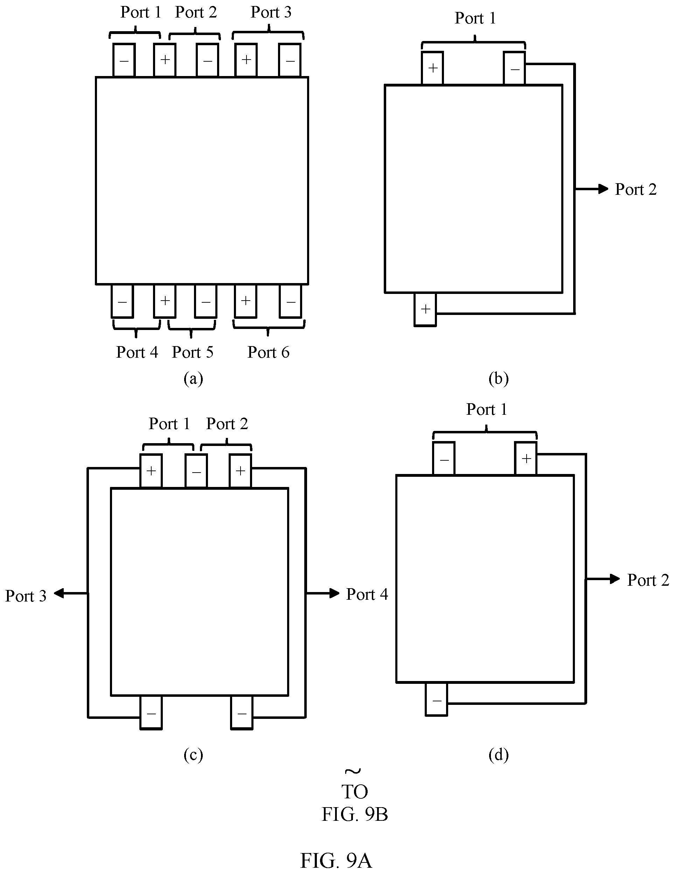

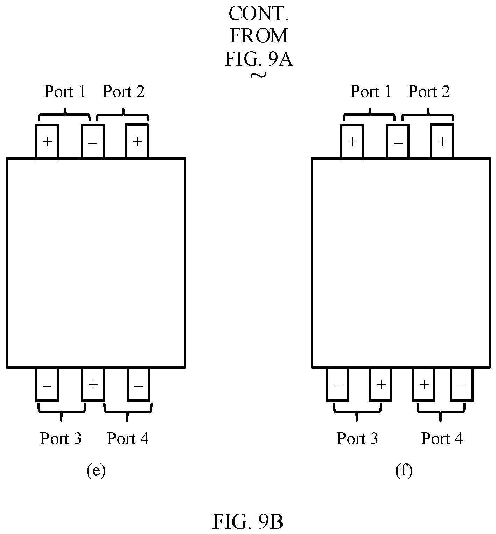

FIG. 9A and FIG. 9B are a schematic diagram of other six charging/discharging ports of a multi-tab electrochemical cell according to an embodiment of this application;

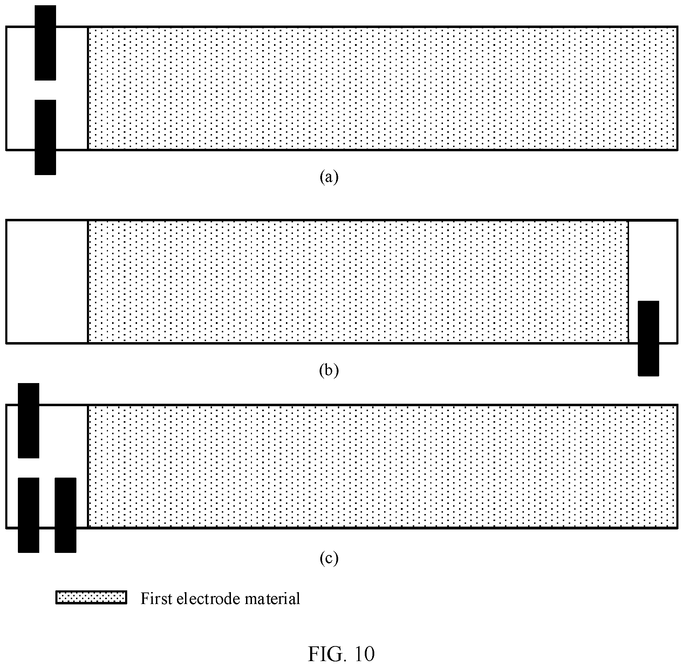

FIG. 10 is a schematic diagram 1 of a structure of other three first electrodes according to an embodiment of this application;

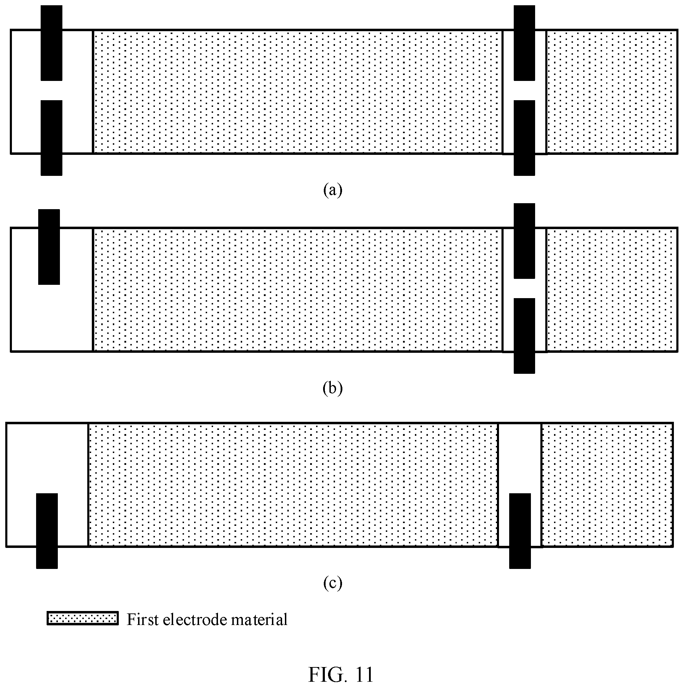

FIG. 11 is a schematic diagram 1 of a structure of other three first electrodes according to an embodiment of this application;

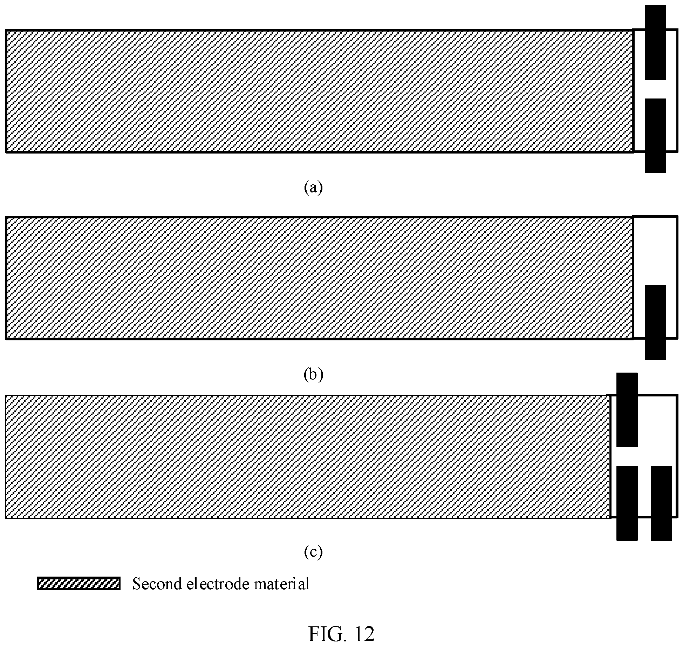

FIG. 12 is a schematic diagram 2 of a structure of other three second electrodes according to an embodiment of this application;

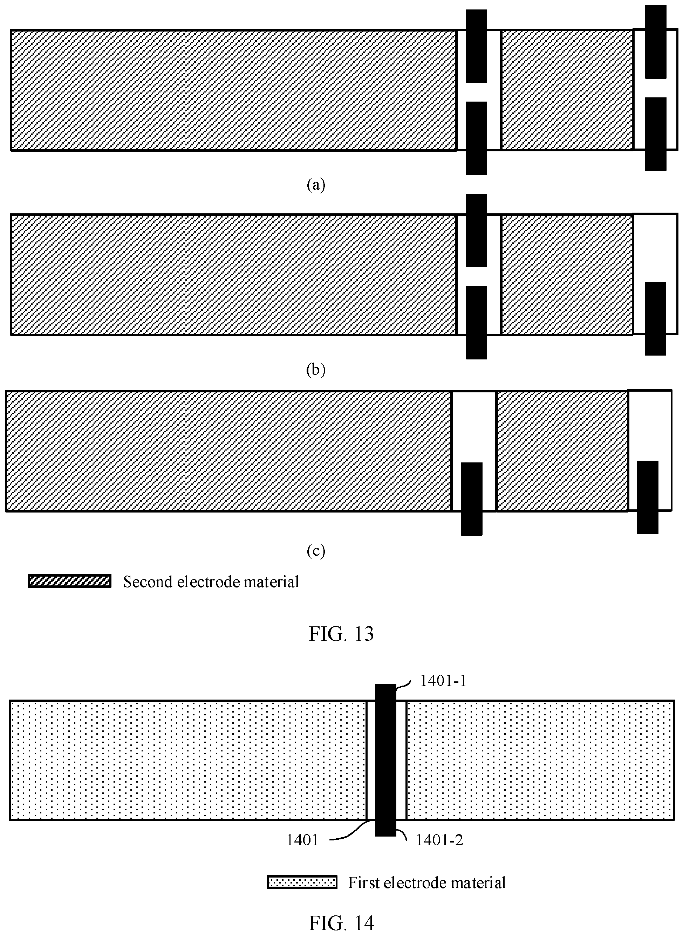

FIG. 13 is a schematic diagram 2 of a structure of other three first electrodes according to an embodiment of this application;

FIG. 14 is a schematic diagram of a structure of another first electrode according to an embodiment of this application;

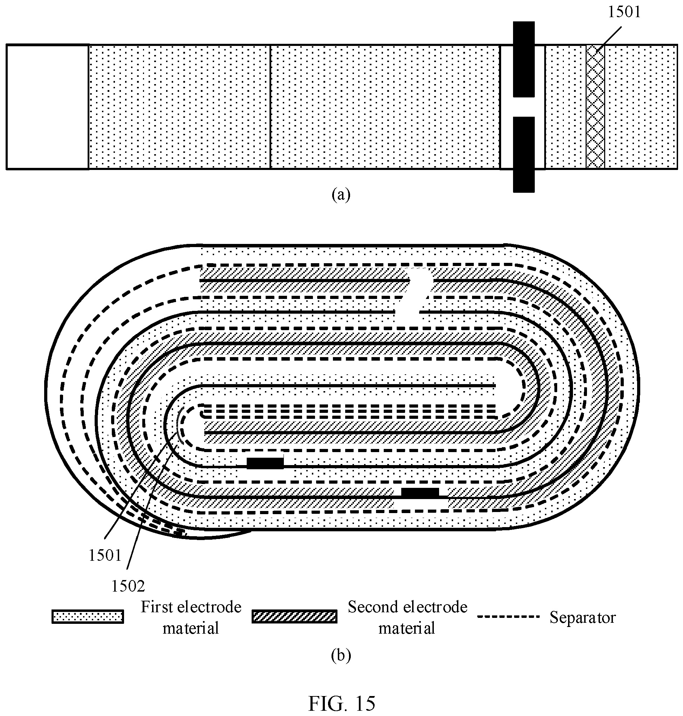

FIG. 15 is a schematic diagram of a structure of a multi-tab jelly roll and a first electrode thereof according to an embodiment of this application;

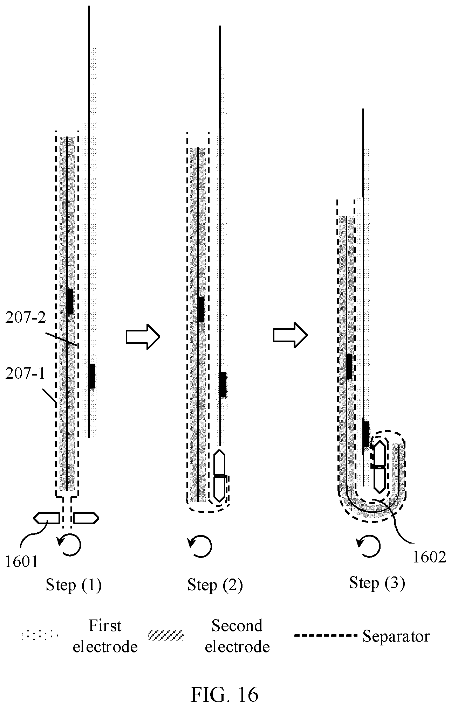

FIG. 16 is a schematic diagram of an electrode winding process according to an embodiment of this application; and

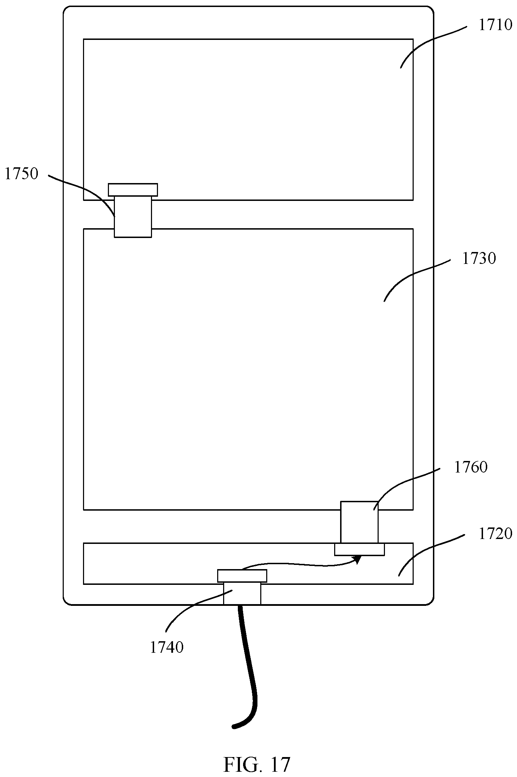

FIG. 17 is a schematic diagram of a structure of a terminal device according to an embodiment of this application.

## DESCRIPTION OF EMBODIMENTS

The following describes technical solutions in embodiments of this application with reference to the accompanying drawings in embodiments of this application.

To make objectives, technical solutions, and advantages of this application clearer, the following further describes this application in detail with reference to accompanying drawings.

The following terms "first" and "second" are merely intended for a purpose of description, and shall not be understood as an indication or implication of relative importance or implicit indication of a quantity of indicated technical features. Therefore, a feature limited by "first", "second", or the like may explicitly or implicitly include one or more features. In the descriptions of this application, unless otherwise stated, "a plurality of" means two or more than two.

In addition, in this application, position terms such as "top" and "bottom" are defined relative to positions of components in the accompanying drawings. It should be understood that these position terms are relative concepts used for relative description and clarification, and may correspondingly change based on changes in the positions of the components in the accompanying drawings.

For ease of understanding, the following describes terms that may be used in embodiments of this application.

Tab: A battery has an anode and a cathode, and the tab is a metal conductor that leads the anode and the cathode out of an electrochemical cell. Generally, the tab for the anode and the cathode of the battery is a contact point during charging/discharging. This contact point is not copper on the surface of the battery, but a connection inside the battery. For example, an anode tab of the battery may be made of an aluminum (Al) material, and a cathode tab of the battery may be made of a nickel (Ni) material or a nickel-plated copper (Ni-Cu) material. This is not limited in embodiments of this application.

Electrode: The electrode includes a current collector and an electrode material. The electrode material is double-coated or single-coated on a part or all of an area of the current collector. For example, the electrode material coated on the current collector of an anode electrode may be a lithium ion intercalation compound (for example, lithium cobalt oxide (Lithium Cobalt Oxide, LiCoO2)), and the electrode material coated on the current collector of a cathode electrode may be a carbon material. Specific composition of the electrode material is not limited in embodiments of this application.

It should be noted that the electrode of the current battery usually refers to an anode electrode and a cathode electrode. For example, in this application, a first electrode may be an anode electrode, and correspondingly, a second electrode is a cathode electrode. The tab on the current electrode usually refers to an anode tab and a cathode tab. For example, in this application, a first tab may be an anode tab, and correspondingly, a second tab is a cathode tab. For example, in this application, a first electrode material is an anode material, and correspondingly, a second electrode material is a cathode material.

Current collector: The current collector is mainly configured to collect currents generated by an electrode material of a battery to form a large current for output. Therefore, the current collector generally needs to be in sufficient contact with the electrode material. For example, the current collector may be double-coated with the electrode material. The current collector is usually a platinum metal sheet. For example, the current collector of an anode electrode may be aluminum (Al) foil, and the current collector of a cathode electrode may be copper (Cu) foil. A material of the current collector is not limited in embodiments of this application.

Separator: The separator is used to separate a first electrode from a second electrode to prevent a short circuit caused by direct contact, to block current conduction and prevent the battery from overheating or even exploding. Generally, the separator further has micropores, to ensure that electrolyte ions pass freely to form a charging/discharging loop.

Double-sided area: The double-sided area is an area on an electrode on which both sides of a current collector are coated with an electrode material, and is also referred to as a double-sided fabric area.

Single-sided area: The single-sided area is an area on an electrode on which one side of a current collector is coated with an electrode material, that is, an area in which one side of the current collector is coated with the electrode material and the other side is not coated with the electrode material.

Blank area: The blank area is a blank current collector area on an electrode, that is, an area in which both sides of the current collector are not coated with an electrode material.

Disposing of a tab in the middle: The tab is disposed on a non-edge blank area of an electrode (also referred to as non-edge disposing of a tab). The non-edge blank area is a blank area that is adjacent to neither a first short side nor a second short side of the electrode. Generally, the non-edge blank area may be disposed between double-sided areas, or between a double-sided area and a single-sided area, or between single-sided areas. During specific manufacturing, an electrode material may be coated on a current collector at intervals to form a non-edge blank area, and a tab is disposed (for example, welded or riveted) on the non-edge blank area.

Disposing of a tab on the edge: The tab is disposed on an edge blank area of an electrode. The edge blank area is disposed next to a first short side of the electrode or a second short side of the electrode.

An embodiment of this application provides a battery. The battery includes a multi-tab electrochemical cell (referred to as an "electrochemical cell" for short below). The electrochemical cell may be applied to a terminal device, and is configured to provide power for the terminal device. The electrochemical cell completes charging by using at least two charging/discharging circuits including at least three tabs. This can reduce heat dissipation pressure of high-current charging on a single link, and improve charging efficiency of the battery. Specifically, the electrochemical cell provided in embodiments of this application may include one second tab and a plurality of first tabs, a plurality of second tabs and a plurality of first tabs, or one first tab and a plurality of second tabs.

In addition, with reference to novel structures of the second tab and the first tab (for example, a plurality of tabs separately protrude from a first long side and a second long side of an electrode, and the tabs are disposed on a non-edge area) and a specific winding manner of a first electrode and a second electrode, stress distribution of an inner ring of the electrochemical cell can be optimized, and interface deterioration of the electrode that is caused by stress unevenness can be alleviated. This effectively reduces a risk of shading and lithium plating generated in a cathode charging/discharging cycle, and improves performance of the battery.

In embodiments of this application, the terminal device may be a mobile phone, a tablet, or a netbook. Alternatively, the method may be further applied to another electronic device such as a desktop device, a laptop device, a handheld device, a wearable device, a smart home device, or a vehicle-mounted device, for example, a netbook, a smart watch, a smart camera, an ultra-mobile personal computer (Ultra-mobile Personal Computer, UMPC), a personal digital assistant (Personal Digital Assistant, PDA), a portable multimedia player (Portable Multimedia Player, PMP), a dedicated media player, or an AR (Augmented Reality)/VR (Virtual Reality) device. A specific type, structure, and the like of the electronic device are not limited in embodiments of this application.

In embodiments of this application, the electrochemical cell may include a first electrode (for example, an anode electrode), a second electrode (for example, a cathode electrode), and a separator used to separate the first electrode from the second electrode. The electrochemical cell is obtained by winding the first electrode, the second electrode, and the separator. Specifically, the separator may include a first separator and a second separator.

The first electrode includes at least one first blank area, and m first tabs are disposed on the at least one first blank area. The second electrode includes at least one second blank area, and n second tabs are disposed on the at least one second blank area. Herein, m and n are positive integers, $m \geq 1$, $n \geq 1$, and m and n are not equal to 1 at the same time. Quantities m and n of tabs on electrodes may be freely set based on sizes of the electrodes. A specific quantity of tabs is not limited in embodiments of this application.

As described above, because the tab is a contact point during charging/discharging, the m first tabs and the n second tabs in this application protrude from corresponding electrodes included in the electrochemical cell. Further, to ensure charging/discharging efficiency of the electrochemical cell, the tab usually protrudes from a long side of the electrode.

In embodiments of this application, the at least one first blank area on the first electrode and the at least one second blank area on the second electrode of the electrochemical cell each include at least one non-edge blank area. The non-edge blank area is a blank area that is adjacent to neither a first short side nor a second short side of the electrode. Generally, the non-edge blank area may be disposed between double-sided areas, or between a double-sided area and a single-sided area, or between single-sided areas. That is, at least one of the tabs on the first electrode and the second electrode is disposed in the middle.

In embodiments of this application, at least two tabs are disposed on at least one of the at least one first blank area on the first electrode and the at least one second blank area on the second electrode. At least one of the at least two tabs protrudes from a first side of a corresponding electrode, and at least one of the at least two tabs protrudes from a second side of the corresponding electrode. The first side is a first long side of the corresponding electrode, and the second side is a second long side of the corresponding electrode.

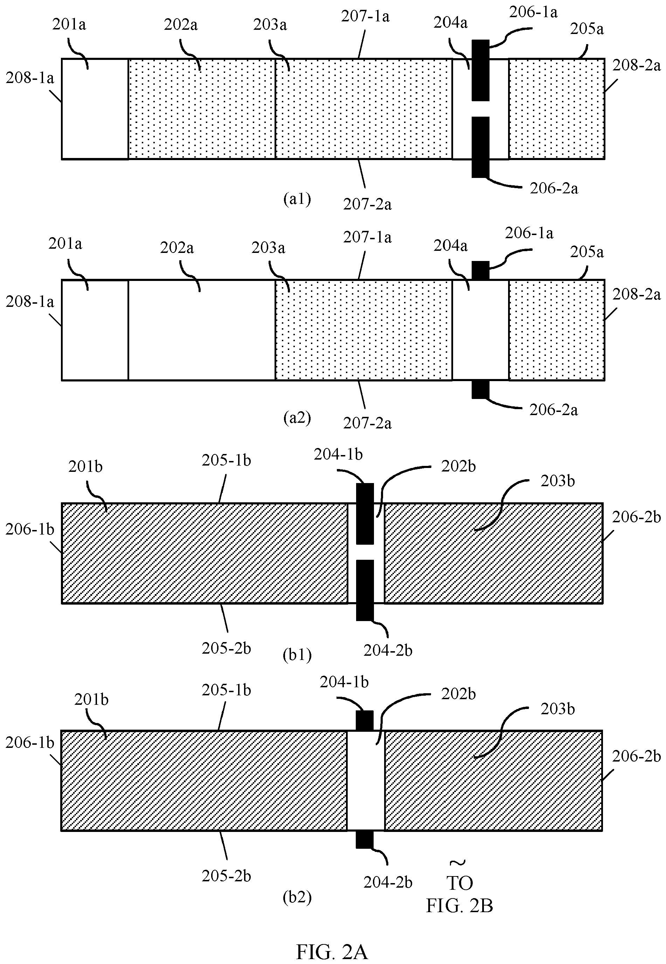

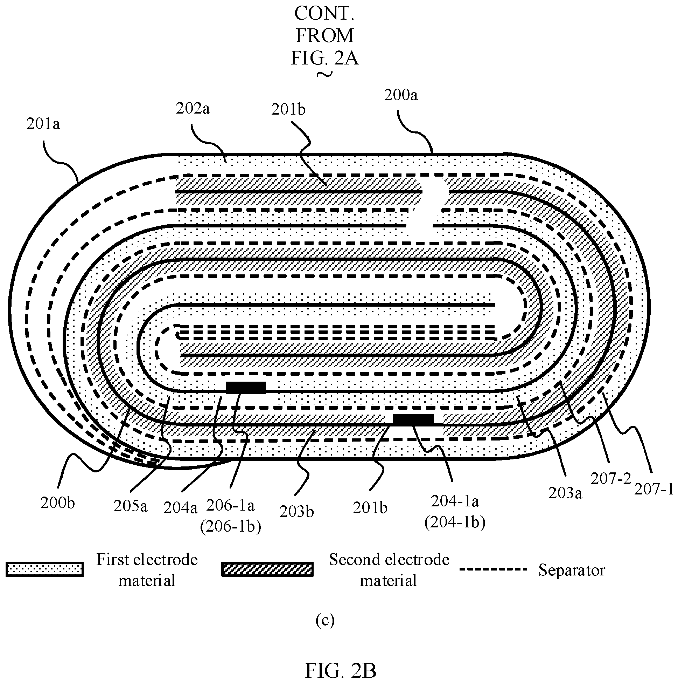

A first electrode shown in (a1) in FIG. 2A and FIG. 2B and (a2) in FIG. 2A and FIG. 2B is used as an example. Two first tabs are disposed on the first electrode: a first tab 206-1a and a first tab 206-2a. The first tab 206-1a protrudes from a first long side 207-1a of the first electrode, and the first tab 206-2a protrudes from a second long side 207-2a of the first electrode. A first electrode shown in (b1) in FIG. 2A and FIG. 2B and (b2) in FIG. 2A and FIG. 2B is used as an example. Two second tabs are disposed on the second electrode: a second tab 204-1b and a second tab 204-2b. The second tab 204-1b protrudes from a first long side 205-1b of the second electrode, and the second tab 204-2b protrudes from a second long side 205-2b of the second electrode.

Possible structures of the first tab and the second tab are described in detail in the following three cases:

Case (1): The m first tabs and the n second tabs are all disposed in the middle.

The at least one first blank area on the first electrode includes $i_1$ non-edge first blank areas, and the m first tabs are disposed on the $i_1$ non-edge first blank areas. The at least one second blank area on the second electrode includes $j_1$ non-edge second blank areas, and the n second tabs are disposed on the $j_1$ non-edge second blank areas. Herein, $m_1$ and $n_1$ are positive integers.

In a possible structure, the first electrode includes one non-edge first blank area (that is, $i_1 = 1$), and the m first tabs are all disposed on the non-edge first blank area. The second electrode includes one non-edge second blank area (that is, $j_1 = 1$), and the n second tabs are all disposed on the non-edge second blank area.

For example, m = 2, and n = 2. FIG. 2A and FIG. 2B are a schematic diagram of a structure of an electrochemical cell with four tabs according to an embodiment of this application. The electrochemical cell included in the battery provided in embodiments of this application may be obtained by winding the first electrode shown in (a1) in FIG. 2A and FIG. 2B and (a2) in FIG. 2A and FIG. 2B, the second electrode shown in (b1) in FIG. 2A and FIG. 2B and (b2) in FIG. 2A and FIG. 2B, and the separator used to separate the first electrode from the second electrode. The electrode includes two opposite sides. (a1) in FIG. 2A and FIG. 2B is a front view of a first side of the first electrode, and (a2) in FIG. 2A and FIG. 2B is a front view of a second side of the first electrode. (b1) in FIG. 2A and FIG. 2B is a front view of a first side of the second electrode, and (b2) in FIG. 2A and FIG. 2B is a front view of a second side of the second electrode.

As shown in (a1) in FIG. 2A and FIG. 2B and (a2) in FIG. 2A and FIG. 2B, the first electrode sequentially includes: a blank area 201a, a single-sided area 202a, a double-sided area 203a, a blank area 204a, and a double-sided area 205a from a first end 208-1a to a second end 208-2a. The blank area 201a and the blank area 204a each are an area in which a current collector on the first electrode is not coated with an electrode material. The single-sided area 202a is an area in which a first side of the current collector on the first electrode is coated with the electrode material (as shown in (a1) in FIG. 2A and FIG. 2B), and a second side of the current collector is not coated with the electrode material (as shown in (a2) in FIG. 2A and FIG. 2B). The double-sided area 203a and the double-sided area 205a each are an area in which both sides of the current collector on the first electrode are coated with the electrode material. The blank area 204a is disposed between the double-sided area 203a and the double-sided area 205a, and is a non-edge blank area. The first tab 206-1a and the first tab 206-2a are disposed on the blank area 204a. The first tab 206-1a protrudes from the first long side 207-1a of the first electrode, and the first tab 206-2a protrudes from the second long side 207-1b of the first electrode. For the current collector on the first electrode, refer to a current collector 200a shown in (c) in FIG. 2A and FIG. 2B.

As shown in (b1) in FIG. 2A and FIG. 2B and (b2) in FIG. 2A and FIG. 2B, the second electrode sequentially includes: a double-sided area 201b, a blank area 202b, and a double-sided area 203b from a first end 206-1b to a second end 206-2b. The double-sided area 201b and the double-sided area 203b each are an area in which both sides of a current collector on the second electrode are coated with an electrode material. The blank area 202b is an area in which the current collector on the second electrode is not coated with the electrode material. The blank area 202b is disposed between the double-sided area 201b and the double-sided area 203b, and is a non-edge blank area. The second tab 204-1b and the second tab 204-2b are disposed on the blank area 202b. The second tab 204-1b protrudes from the first long side 205-lb of the second electrode, and the second tab 204-2b protrudes from the second long side 205-2b of the second electrode. For the current collector on the second electrode, refer to a current collector 200b shown in (c) in FIG. 2A and FIG. 2B.

For a sectional view of the jelly roll including the first electrode shown in (a1) in FIG. 2A and FIG. 2B and (a2) in FIG. 2A and FIG. 2B and the second electrode shown in (b1) in FIG. 2A and FIG. 2B and (b2) in FIG. 2A and FIG. 2B, refer to (c) in FIG. 2A and FIG. 2B. As shown in (c) in FIG. 2A and FIG. 2B, the first electrode and the second electrode are separated by using the separator. The separator includes a first separator 207-1 and a second separator 207-2.

It should be noted that the first tab 206-1a and the first tab 206-2a may be connected to a first side of the blank area 204a through welding, riveting, or the like, and the second tab 204-1b and the second tab 204-2b may be connected to a first side of the blank area 202b through welding, riveting, or the like. A manner of connecting the tab to the current collector (or the blank area) is not limited in embodiments of this application. A tab and a current collector on an electrode of another structure in the following may be connected through welding, riveting, or the like, and details are not described herein.

Optionally, in embodiments of this application, a distance $d$ between a tab and each of a first end (for example, the first end 208-1a or the first end 206-1b) and a second end (for example, the second end 208-2a or the second end 206-2b) of a corresponding electrode is

from $\dfrac{1}{4}l$ to $\dfrac{1}{2}l$. For example, $d \in \left(\dfrac{1}{4}l, \dfrac{1}{2}l\right]$,

$d \in \left[\dfrac{1}{4}l, \dfrac{1}{2}l\right]$, or $d \in \left[\dfrac{1}{4}l, \dfrac{1}{2}l\right)$. Herein, $l$ is a length of the electrode. As shown in (a1) in FIG. 2A and FIG. 2B and (a2) in FIG. 2A and FIG. 2B, a distance $d_1$ between the first end 208-1a of the first electrode and each of the first tab 206-1a and the second tab 206-2a of the first electrode is from $\dfrac{1}{4}l$ to $\dfrac{1}{2}l$, and a distance $d_2$ between the second end 208-2a and each of the first tab 206-1a and the second tab 206-2a is also from $\dfrac{1}{4}l$ to $\dfrac{1}{2}l$.

A jelly roll shown in (c) in FIG. 2A and FIG. 2B is obtained by winding the first electrode shown in (a1) in FIG. 2A and FIG. 2B and (a2) in FIG. 2A and FIG. 2B and the second electrode shown in (b1) in FIG. 2A and FIG. 2B and (b2) in FIG. 2A and FIG. 2B. Then, an electrochemical cell including four tabs and shown in (a) in FIG. 3A-1 and FIG. 3A-2 may be obtained after a series of operations such as packaging, liquid injection, chemical formation, and secondary sealing are performed on the jelly roll. Two groups of tabs included in the jelly roll shown in (c) in FIG. 2A and FIG. 2B may be used as two ports (also referred to as charging/discharging ports) for charging and discharging an electrochemical cell 300, for example, a port 1 and a port 2 shown in (a) in FIG. 3A-1 and FIG. 3A-2, which are both used for charging or discharging, or are used for charging and discharging respectively.

The electrochemical cell including four tabs and shown in (a) in FIG. 3A-1 and FIG. 3A-2 and another component in the terminal device jointly form a charging system shown in (b) in FIG. 3A-1 and FIG. 3A-2. The charging system shown in (b) in FIG. 3A-1 and FIG. 3A-2 includes a protection circuit, a connection circuit, a buck circuit, and the like. The protection circuit is configured to prevent overcharging and over-discharging to protect the battery. The connection circuit is configured to connect the battery to another component inside the terminal. For example, the connection circuit connects the battery to a mainboard circuit or a sub-board circuit. The buck circuit is configured to perform voltage conversion, to improve energy utilization and reduce energy loss.

As shown in (b) in FIG. 3A-1 and FIG. 3A-2, a solid arrow represents a charging current path direction. During charging, the electrochemical cell 300 may complete charging together with a link (referred to as a first link for short below) including the port 1 shown in FIG.

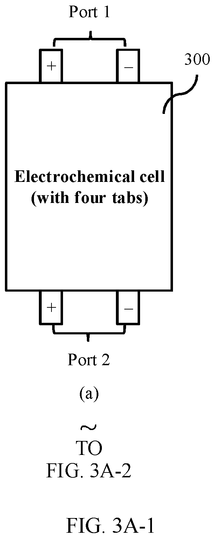

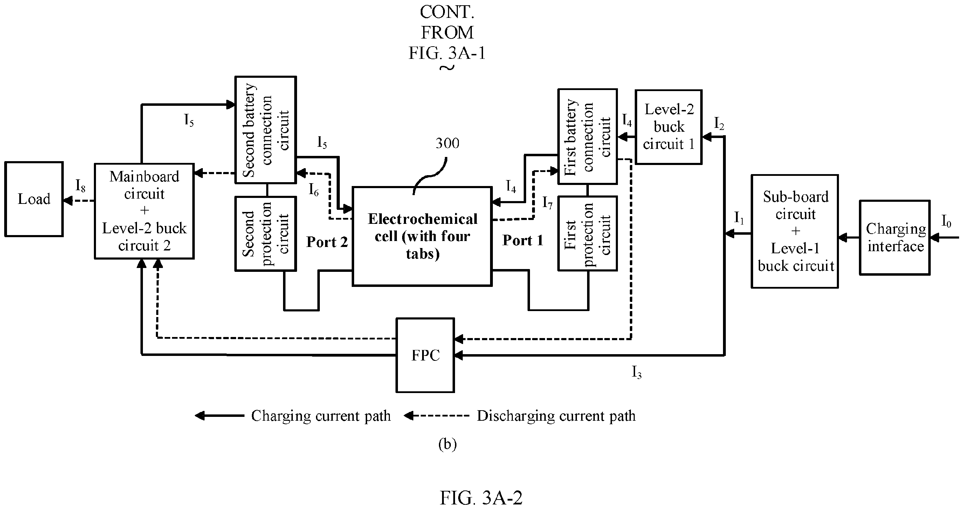

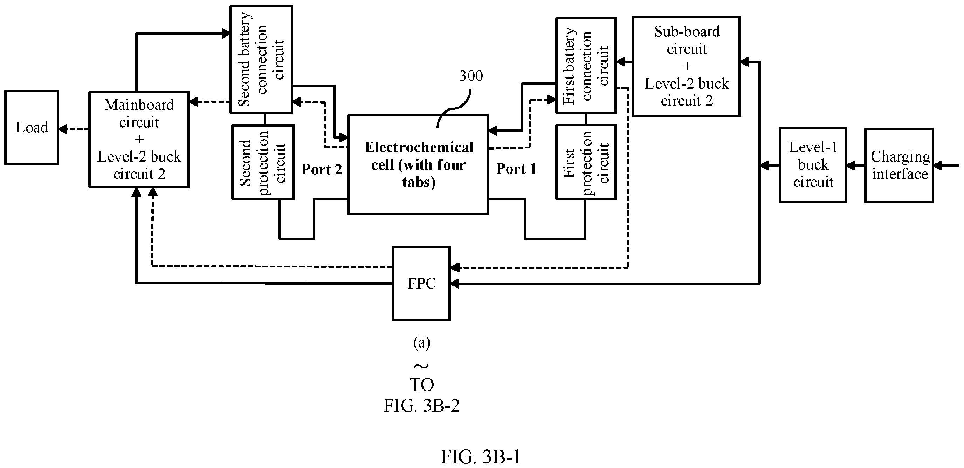

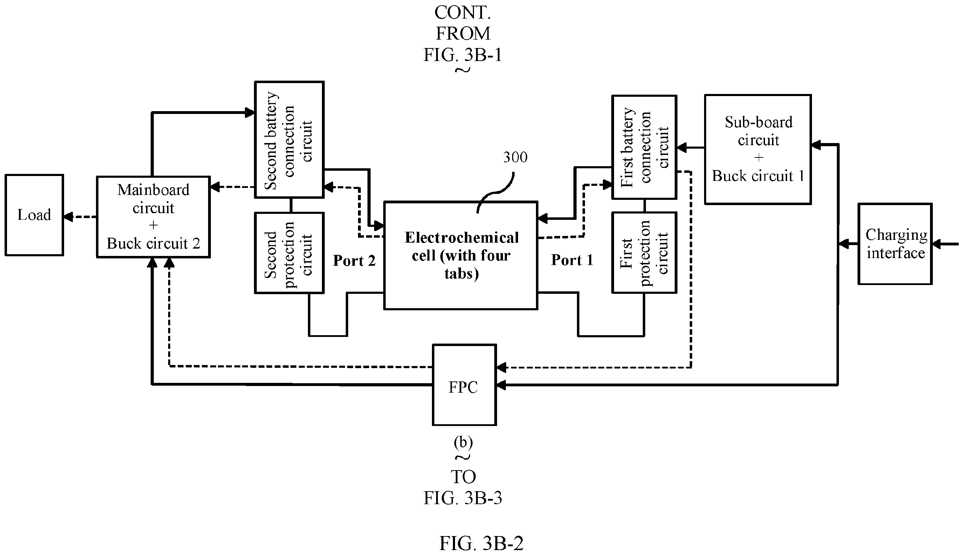

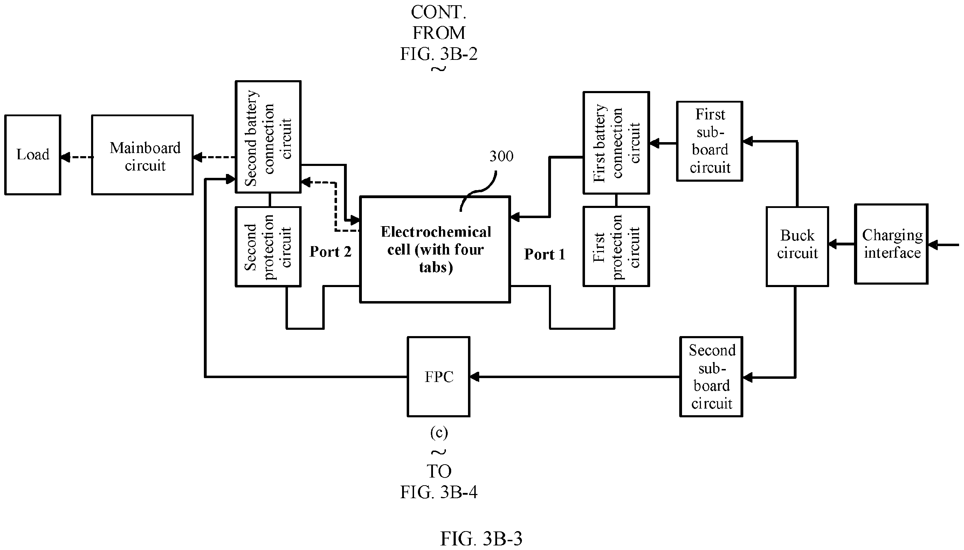

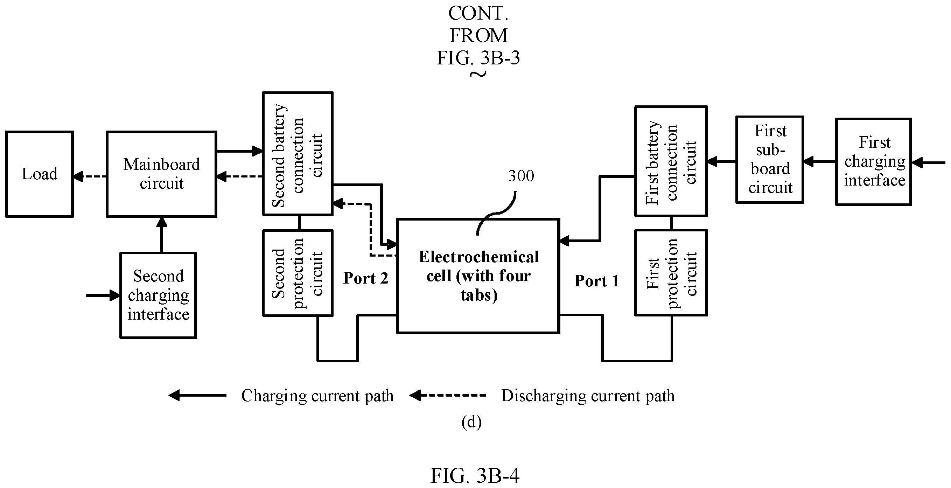

3A-1 and FIG. 3A-2 and a link (referred to as a second link for short below) including the port 2 shown in FIG. 3A-1 and FIG. 3A-2. Specifically, a current $I_0$ flows in through a charging interface, and passes through a sub-board circuit and a level-1 buck circuit, to output a current $I_1$. Generally, $I_1 \geq I_0$. Subsequently, the current $I_1$ is divided into $I_2$ and $I_3$, and $I_2$ is converted into a larger current $I_4$ through a level-2 buck circuit 1, and the current $I_4$ is input to the electrochemical cell 300 from the port 1 of the electrochemical cell 300 through a first battery connection circuit, to complete charging on the first link. The current $I_3$ obtained from $I_1$ through division flows through a mainboard circuit and a level-2 buck circuit 2 through a flexible circuit board (Flexible Printed Circuit, FPC), to output a higher current $I_5$, and the current $I_5$ is input to the electrochemical cell 300 from the port 2 of the electrochemical cell 300 through a second battery connection circuit, to complete charging on the second link.

It may be understood that the charging is completed by the electrochemical cell 300 that includes a plurality of ports shown in FIG. 3A-1 and FIG. 3A-2, so that heat dissipation pressure of high-current charging on a single link can be reduced, charging efficiency of the battery can be improved, and the battery can have a stronger fast charging capability. Specifically, it is assumed that a maximum current threshold of the single charging link is 12A. When a high current is used for charging, a component related to the charging link is severely overheated and may exceed a limit temperature of the component. Therefore, the charging current of the single charging link generally needs to be controlled below 12A. Because a battery of the single link is limited by the charging current, it is difficult to further improve a high-current charging capability, causing a bottleneck. However, for the multi-port battery including the multi-tab electrochemical cell 300 provided in embodiments of this application, the input currents $I_4$ and $I_5$ of the two ports are controlled to be 6A, so that 12A charging of the battery can be easily implemented, and the single charging link only needs to withstand heat generated during 6A charging. Therefore, heat dissipation pressure of the single charging link is much lower than that of a conventional battery with only one charging link. In addition, according to the foregoing maximum current threshold of the charging link, the battery provided in embodiments of this application may perform charging at the current 12A on two charging links, and an overall charging current of the battery may reach 24A, so that the single link only needs to withstand heat dissipation pressure during 12A charging. Therefore, the charging capability and charging efficiency are improved exponentially.

In addition, when the battery provided in embodiments of this application performs charging, if one charging link is occupied or faulty, it is further ensured that the battery can normally perform charging. For example, when the charging link including the port 2 performs discharging at a high current, the charging link including the port 1 normally performs charging.

As shown in (b) in FIG. 3A-1 and FIG. 3A-2, a dashed arrow represents a discharging current path direction. Discharging of the electrochemical cell 300 may be completed by using the first link and/or the second link. Specifically, a current $I_6$ flows out from the port 2 of the electrochemical cell 300, and passes through the second battery connection circuit and then arrives at the mainboard circuit. A current $I_7$ flows out from the port 1 of the electrochemical cell 300, and passes through the first battery connection circuit and the FPC and then arrives at the mainboard circuit, to finally output a current $I_8$ from the mainboard circuit to a load.

It should be noted that charging and discharging of the battery provided in embodiments of this application may be completed by using both the first link and the second link or any one of the first link and the second link. For example, the first link may be used for charging, and the second link may be for discharging. Alternatively, the second link may be used for charging, and the first link may be for discharging. This is not limited in embodiments of this application.

It should be noted that (b) in FIG. 3A-1 and FIG. 3A-2 is merely a schematic diagram of charging/discharging of an electrochemical cell with four tabs. A specific charging/discharging circuit is not limited in embodiments of this application. For example, the schematic diagram of the charging/discharging circuit of the electrochemical cell 300 with four tabs may alternatively be a schematic circuit diagram shown in (a) in FIG. 3B-1 to FIG. 3B-4, (b) in FIG. 3B-1 to FIG. 3B-4, (c) in FIG. 3B-1 to FIG. 3B-4, or (d) in FIG. 3B-1 to FIG. 3B-4.

It should be noted that, in FIG. 2A and FIG. 2B, that the first electrode includes two first tabs (that is, m = 2), and the second electrode includes two second tabs (that is, n = 2) is merely used as an example of the electrochemical cell with four tabs provided in embodiments of this application. The tab disposing manner shown in FIG. 2A and FIG. 2B is applicable to an electrode including any quantity of tabs. For example, the first side of the first electrode in embodiments of this application may alternatively be a structure that is shown in (a) in FIG. 4 and in which three first tabs are disposed in the middle, a structure that is shown in (b) in FIG. 4 and in which four first tabs are disposed in the middle, or a structure that is shown in (d) in FIG. 4 and in which two first tabs are disposed in the middle. The first electrode shown in (a) in FIG. 4 and including three tabs includes two first tabs protruding from a first long side of the first electrode and one first tab protruding from a second long side of the first electrode. The first electrode shown in (b) in FIG. 4 and including four tabs includes two first tabs protruding from a first long side of the first electrode and two first tabs protruding from a second long side of the first electrode.

Alternatively, the first side of the first electrode may have a structure that is shown in (c) in FIG. 4 and in which one first tab is disposed in the middle, or another similar structure. When the first electrode includes one first tab that is disposed in the middle, the second electrode needs to include a plurality of second tabs (the structure shown in (b1) in FIG. 2A and FIG. 2B and (b2) in FIG. 2A and FIG. 2B), that is, m = 1, and n > 1, to ensure that the electrochemical cell has at least three tabs to form at least two ports for charging/discharging. Similarly, the tab disposing manner shown in FIG. 2A and FIG. 2B is also applicable to a second electrode including any quantity of tabs, as shown in (a) in FIG. 5, (b) in FIG. 5, or (d) in FIG. 5. Alternatively, the first side of the second electrode may be a structure shown in (c) in FIG. 5 or another similar structure. When the second electrode includes one second tab that is disposed in the middle, the first electrode needs to include a plurality of first tabs (the structure shown in (a1) in FIG. 2A and FIG. 2B and (a2) in FIG. 2A and FIG. 2B), that is, n = 1, and m > 1, to ensure that the electrochemical cell has at least three tabs to form at least two ports for charging/discharging.

It may be understood that (a) in FIG. 4, (b) in FIG. 4, (c) in FIG. 4, and (d) in FIG. 4 show only four possible structures of the first side of the first electrode. For detailed structures of second sides of the first electrode and the second electrode in each structure described below, details are not described in embodiments of this application. For details, refer to the structure shown in (a2) in FIG. 2A and FIG. 2B and (b2) in FIG. 2A and FIG. 2B of the second side of the electrode with two tabs.

For example, the multi-tab electrochemical cell may further include the first electrode shown in any one of (a1) in FIG. 2A and FIG. 2B and (a2) in FIG. 2A and FIG. 2B, (a) in FIG. 4, (b) in FIG. 4, and (d) in FIG. 4, and the second electrode shown in (a) in FIG. 5, (b) in FIG. 5, (c) in FIG. 5, or (d) in FIG. 5. Alternatively, the multi-tab electrochemical cell may further include the first electrode shown in (c) in FIG. 4, and the second electrode shown in (a) in FIG. 5, (b) in FIG. 5, or (d) in FIG. 5.

In another possible structure, the first electrode includes one non-edge first blank area (that is, $i_1 = 1$), and the m first tabs are disposed on the non-edge first blank area. The second electrode includes a plurality of non-edge second blank areas (that is, $j_1 > 1$), and the n second tabs are dispersedly disposed on the plurality of non-edge second blank areas. Herein, $m \geq 1$, and $n > 1$.

Alternatively, the first electrode includes a plurality of non-edge first blank areas (that is, $i_1 > 1$), and the m first tabs are dispersedly disposed on the plurality of non-edge first blank areas. The second electrode includes one non-edge second blank area (that is, $j_1 = 1$), and the n second tabs are disposed on the non-edge second blank area. Herein, $m > 1$, and $n \geq 1$.

For example, the first electrode may have the structure shown in any one of (a1) in FIG. 2A and FIG. 2B and (a2) in FIG. 2A and FIG. 2B, (a) in FIG. 4, (b) in FIG. 4, and (c) in FIG. 4, or another structure similar to a structure in which a tab is disposed in the middle. The second electrode may have a structure shown in (a) in FIG. 6. As shown in (a) in FIG. 6, the second electrode includes six second tabs disposed on three non-edge second blank areas. One second electrode protruding from a first long side of the second electrode and one second tab protruding from a second long side of the second electrode are disposed on each non-edge second blank area. Alternatively, the second electrode may have a structure shown in (b) in FIG. 6. As shown in (b) in FIG. 6, the second electrode includes four second tabs disposed on two non-edge second blank areas. One second tab protruding from a first long side of the second electrode and one second tab protruding from a second long side of the second electrode are disposed on each non-edge second blank area. Alternatively, the second electrode may have a structure shown in (c) in FIG. 6. As shown in (c) in FIG. 6, the second electrode includes three second tabs disposed on two non-edge second blank areas. One second tab protruding from a first long side of the second electrode and one second tab protruding from a second long side of the second electrode are disposed on one non-edge second blank area, and one second tab protruding from the second long side of the second electrode is disposed on one non-edge second blank area. Alternatively, the second electrode may have another structure similar to a structure in which a plurality of tabs are disposed in the middle of a plurality of non-edge second blank areas.

Alternatively, the second electrode may have the structure shown in any one of (b1) in FIG. 2A and FIG. 2B and (b2) in FIG. 2A and FIG. 2B, (a) in FIG. 5, (b) in FIG. 5, (c) in FIG. 5, and (d) in FIG. 5, or another structure similar to a structure in which a tab is disposed in the middle of one non-edge second blank area. The first electrode may have a structure shown in (a) in FIG. 7. As shown in (a) in FIG. 7, the first electrode includes six first tabs disposed on three non-edge first blank areas. One first tab protruding from a first long side of the first electrode and one first tab protruding from a second long side of the first electrode are disposed on each non-edge first blank area. Alternatively, the first electrode may have a structure shown in (b) in FIG. 7. As shown in (b) in FIG. 7, the first electrode includes four first tabs disposed on two non-edge first blank areas. One first tab protruding from a first long side of the first electrode and one first tab protruding from a second long side of the first electrode are disposed on each non-edge first blank area. Alternatively, the first electrode may have a structure shown in (c) in FIG. 7. As shown in (c) in FIG. 7, the first electrode includes three first tabs disposed on two non-edge first blank areas. One first tab protruding from a first long side of the first electrode and one first tab protruding from a second long side of the first electrode are disposed on one non-edge first blank area, and one first tab protruding from the second long side of the first electrode is disposed on one non-edge first blank area. Alternatively, the first electrode may have another structure similar to a structure in which a plurality of tabs are disposed in the middle of a plurality of non-edge first blank areas.

In another possible structure, the first electrode includes a plurality of non-edge first blank areas (that is, $i_1 > 1$), and the m first tabs are dispersedly disposed on the plurality of non-edge first blank areas. The second electrode includes a plurality of non-edge second blank areas (that is, $j_1 > 1$), and the n second tabs are dispersedly disposed on the plurality of non-edge second blank areas. Herein, $m > 1$, and $n > 1$.

For example, the first electrode may have the structure shown in any one of (a) in FIG. 7, (b) in FIG. 7, and (c) in FIG. 7, or another structure similar to a structure in which a plurality of tabs are disposed in the middle of a plurality of non-edge first blank areas. The second electrode may have the structure shown in any one of (a) in FIG. 6, (b) in FIG. 6, and (c) in FIG. 6, or another structure similar to a structure in which a plurality of tabs are disposed in the middle of a plurality of non-edge second blank areas.

An electrochemical cell with eight tabs that includes the first electrode including four tabs and shown in (b) in FIG. 7 and the second electrode including four tabs and shown in (b) in FIG. 6 may have four charging/discharging ports (including a port 1, a port 2, a port 3, and a port 4) shown in (a) in FIG. 8A and FIG. 8B. A charging/discharging circuit of the electrochemical cell may be shown in (b) in FIG. 8A and FIG. 8B. The electrochemical cell including eight tabs and shown in (a) in FIG. 8A and FIG. 8B may be completed by using at least one of a first link, a second link, a third link, and a fourth link. For example, the first link, the second link, the third link, and the fourth link may be jointly used to complete charging, or may be separately used to complete charging and discharging. The first link is charging interface→sub-board circuit+level-1 buck circuit→level-2 buck circuit→first battery connection circuit+first protection circuit→port 1. The second link is charging interface→sub-board circuit+level-1 buck circuit→level-2 buck circuit→second battery connection circuit+second protection circuit→port 2. The third link is charging interface→sub-board circuit+level-1 buck circuit→FPC→ mainboard circuit+level-2 buck circuit 2→third battery connection circuit+third protection circuit→port 3. The fourth link is charging interface→sub-board circuit+level-1 buck circuit→FPC→mainboard circuit+level-2 buck circuit 2→fourth battery connection circuit+fourth protection circuit→port 4. The battery that includes the electrochemical cell including eight tabs and shown in (a) in FIG. 8A and FIG. 8B is used to complete charging, so that fast charging and high-power charging capabilities of the battery can be further improved.

For another example, an electrochemical cell with 10 tabs that includes the first electrode including four tabs and shown in (b) in FIG. 7 and the second electrode including six tabs and shown in (a) in FIG. 6 may have six charging/discharging ports shown in (a) in FIG. 9A and FIG. 9B. Five groups of tabs including the four first tabs of the first electrode and the six second tabs of the second electrode may form six charging/discharging ports. Therefore, fast charging and high-power charging capabilities of the battery can be further improved.

It should be noted that, in the electrochemical cell that includes the first electrode including four tabs and shown in (b) in FIG. 7 and the second electrode including six tabs and shown in (a) in FIG. 6, one first tab may be multiplexed for two second tabs, to form more charging/discharging ports for charging. For any other odd quantity of first electrodes and any other even quantity of second electrodes, or any other even quantity of first electrodes and any other odd quantity of second electrodes, charging/discharging ports may also be formed in a multiplexing manner similar to that of the electrochemical cell that includes the first electrode including four tabs and shown in (b) in FIG. 7 and the second electrode including six tabs and shown in (a) in FIG. 6.

Case (2): At least one of the m first tabs is disposed on the edge, and the n second tabs are all disposed in the middle.

The at least one first blank area on the first electrode includes one edge first blank area, and at least one of the m first tabs is disposed on the edge first blank area. The at least one second blank area on the second electrode includes $j_2$ non-edge second blank areas, and the n second tabs are disposed on the $j_2$ non-edge second blank areas. Herein, $j_2$ is a positive integer.

In a possible structure, the first electrode includes only one first blank area, the first blank area is an edge first blank area, and the m first tabs are all disposed on the edge first blank area. The at least one second blank area on the second electrode includes $j_2$ edge second blank areas, and the n second tabs are disposed on the $j_2$ non-edge second blank areas.

For example, the first electrode may have a structure that is shown in (a) in FIG. 10 and in which two tabs are disposed on the edge, and the second electrode may have the structure that is shown in (b1) in FIG. 2A and FIG. 2B and (b2) in FIG. 2A and FIG. 2B and in which two tabs are disposed in the middle. A charging/discharging port of an included electrochemical cell with four tabs may be shown in (a) in FIG. 3A-1 and FIG. 3A-2. A charging/discharging circuit of a battery including the electrochemical cell with four tabs may be any of the charging/discharging circuits shown in (b) in FIG. 3A-1 and FIG. 3A-2, (a) in FIG. 3B-1 to FIG. 3B-4, (b) in FIG. 3B-1 to FIG. 3B-4, (c) in FIG. 3B-1 to FIG. 3B-4, and (d) in FIG. 3B-1 to FIG. 3B-4.

For another example, the first electrode may have a structure that is shown in (a) in FIG. 10 and in which two tabs are disposed on the edge, and the second electrode may have the structure that is shown in (c) in FIG. 5 and in which one tab is disposed in the middle. A charging/discharging port of an included electrochemical cell with three tabs may be shown in (b) in FIG. 9A and FIG. 9B, and one second tab in the second electrode shown in (c) in FIG. 5 is multiplexed for two first tabs in the first electrode shown in (a) in FIG. 10. A charging/discharging circuit of a battery including the electrochemical cell with three tabs may be any of the charging/discharging circuits shown in (b) in FIG. 3A-1 and FIG. 3A-2, (a) in FIG. 3B-1 to FIG. 3B-4, (b) in FIG. 3B-1 to FIG. 3B-4, (c) in FIG. 3B-1 to FIG. 3B-4, and (d) in FIG. 3B-1 to FIG. 3B-4.

For another example, the first electrode may have a structure that is shown in (a) in FIG. 10 and in which two tabs are disposed on the edge, and the second electrode may have the structure that is shown in (b) in FIG. 5 or (c) in FIG. 6 and in which three tabs are disposed in the middle. A charging/discharging port of an included electrochemical cell with five tabs may be shown in (c) in FIG. 9A and FIG. 9B, and two first tabs in the first electrode shown in (a) in FIG. 10 are multiplexed for three second tabs in the second electrode shown in (b) in FIG. 5 or (c) in FIG. 6. A charging/discharging circuit of a battery including the electrochemical cell with five tabs may be any of the charging/discharging circuits shown in (b) in FIG. 3A-1 and FIG. 3A-2, (a) in FIG. 3B-1 to FIG. 3B-4, (b) in FIG. 3B-1 to FIG. 3B-4, (c) in FIG. 3B-1 to FIG. 3B-4, and (d) in FIG. 3B-1 to FIG. 3B-4.

For another example, the first electrode may have a structure that is shown in (b) in FIG. 10 and in which one tab is disposed on the edge, and the second electrode may have the structure that is shown in (b1) in FIG. 2A and FIG. 2B and (b2) in FIG. 2A and FIG. 2B and in which two tabs are disposed in the middle. A charging/discharging port of an included electrochemical cell with three tabs may be shown in (d) in FIG. 9A and FIG. 9B, and one first tab in the first electrode shown in (b) in FIG. 10 is multiplexed for two second tabs in the second electrode shown in (b1) in FIG. 2A and FIG. 2B or (b2) in FIG. 2A and FIG. 2B. A charging/discharging circuit of a battery including the electrochemical cell with three tabs may be any of the charging/discharging circuits shown in (b) in FIG. 3A-1 and FIG.3A-2, (a) in FIG. 3B-1 to FIG. 3B-4, (b) in FIG. 3B-1 to FIG. 3B-4, (c) in FIG. 3B-1 to FIG. 3B-4, and (d) in FIG. 3B-1 to FIG. 3B-4.

Alternatively, the first electrode may have a structure that is shown in (c) in FIG. 10 and in which three tabs are disposed on the edge, or another similar structure in which a tab is disposed on the edge. The second electrode may have any one of the structure that is shown in (b1) in FIG. 2A and FIG. 2B and (b2) in FIG. 2A and FIG. 2B and in which two tabs are disposed in the middle, the structure that is shown in (a) in FIG. 5 and in which four tabs are disposed in the middle, the structure that is shown in (b) in FIG. 5 and in which three tabs are disposed in the middle, the structure that is shown in (c) in FIG. 5 and in which one tab is disposed in the middle, the structure that is shown in (d) in FIG. 5 and in which two tabs are disposed in the middle, the structure that is shown in (a) in FIG. 6 and in which six tabs are disposed in the middle, the structure that is shown in (b) in FIG. 6 and in which four tabs are disposed in the middle, and the structure that is shown in (c) in FIG. 6 and in which three tabs are disposed in the middle, or another similar structure in which a tab is disposed in the middle. No enumeration is provided in embodiments of this application. For a diagram of the included charging/discharging port and a diagram of the included charging/discharging link, refer to the foregoing examples. An electrochemical cell including six tabs and shown in (e) in FIG. 9A and FIG. 9B may include the first electrode that is shown in (c) in FIG. 10 and that has the structure in which three tabs are disposed on the edge, and the second electrode that is shown in (b) in FIG. 5 and that has the structure in which three tabs are disposed in the middle.

In another possible structure, the first electrode includes at least one edge first blank area and at least one non-edge first blank area, at least one of the m first tabs is disposed on the at least one edge first blank area, and at least one of the m first tabs is disposed on the at least one non-edge first blank area. The at least one second blank area on the second electrode includes $j_2$ non-edge second blank areas, and the n second tabs are disposed on the $j_2$ non-edge second blank areas.

For example, the first electrode may have a structure that is shown in (a) in FIG. 11 and in which two tabs are disposed in the middle and two tabs are disposed on the edge, and the second electrode may have the structure that is shown in (a) in FIG. 5 and in which four tabs are disposed in the middle. A charging/discharging port of an included electrochemical cell with eight tabs may be shown in (a) in FIG. 8A and FIG. 8B. A charging/discharging circuit of a battery including the electrochemical cell with eight tabs may be shown in (b) in FIG. 8A and FIG. 8B.

Alternatively, the first electrode may have a structure that is shown in (a) in FIG. 11 and in which two tabs are disposed in the middle and two tabs are disposed on the edge, and the second electrode may have any one of the structure that is shown in (b1) in FIG. 2A and FIG. 2B and (b2) in FIG. 2A and FIG. 2B and in which two tabs are disposed in the middle, the structure that is shown in (b) in FIG. 5 and in which three tabs are disposed in the middle, the structure that is shown in (d) in FIG. 5 and in which two tabs are disposed in the middle, the structure that is shown in (a) in FIG. 6 and in which six tabs are disposed in the middle, the structure that is shown in (b) in FIG. 6 and in which four tabs are disposed in the middle, and the structure that is shown in (c) in FIG. 6 and in which three tabs are disposed in the middle, or another similar structure in which a tab is disposed in the middle. For a diagram of the included charging/discharging port and a diagram of the included charging/discharging link, refer to the foregoing examples.

Alternatively, the first electrode may have a structure that is shown in (b) in FIG. 11 and in which two tabs are disposed in the middle and one tab is disposed on the edge, and the second electrode may have the structure that is shown in (b) in FIG. 6 and in which four tabs are disposed in the middle. For a diagram of the included charging/discharging port and a diagram of the included charging/discharging link, refer to the foregoing examples.

Alternatively, the first electrode may have a structure that is shown in (b) in FIG. 11 and in which two tabs are disposed in the middle and one tab is disposed on the edge, or another similar structure in which a tab is disposed in the middle and a tab is disposed on the edge. The second electrode may have any one of the structure that is shown in (b1) in FIG. 2A and FIG. 2B and (b2) in FIG. 2A and FIG. 2B and in which two tabs are disposed in the middle, the structure that is shown in (a) in FIG. 5 and in which four tabs are disposed in the middle, the structure that is shown in (b) in FIG. 5 and in which three tabs are disposed in the middle, the structure that is shown in (d) in FIG. 5 and in which two tabs are disposed in the middle, the structure that is shown in (a) in FIG. 6 and in which six tabs are disposed in the middle, the structure that is shown in (b) in FIG. 6 and in which four tabs are disposed in the middle, and the structure that is shown in (c) in FIG. 6 and in which three tabs are disposed in the middle, or another similar structure in which a tab is disposed in the middle. For a diagram of the included charging/discharging port and a diagram of the included charging/discharging link, refer to the foregoing examples.

Alternatively, the first electrode may have a structure that is shown in (c) in FIG. 11 and in which one tab is disposed in the middle and one tab is disposed on the edge, or another similar structure in which a tab is disposed in the middle and a tab is disposed on the edge. The second electrode may have any one of the structure that is shown in (b1) in FIG. 2A and FIG. 2B or (b2) in FIG. 2A and FIG. 2B and in which two tabs are disposed in the middle, the structure that is shown in (a) in FIG. 5 and in which four tabs are disposed in the middle, the structure that is shown in (b) in FIG. 5 and in which three tabs are disposed in the middle, the structure that is shown in (d) in FIG. 5 and in which two tabs are disposed in the middle, the structure that is shown in (b) in FIG. 6 and in which four tabs are disposed in the middle, and the structure that is shown in (c) in FIG. 6 and in which three tabs are disposed in the middle, or another similar structure in which a tab is disposed in the middle. For a diagram of the included charging/discharging port and a diagram of the included charging/discharging link, refer to the foregoing examples.

Case (3): The m first tabs are all disposed in the middle, and at least one of the n second tabs is disposed on the edge.

The at least one first blank area on the first electrode includes $i_2$ non-edge first blank areas, and the m first tabs are disposed on the $i_2$ non-edge first blank areas. The at least one second blank area on the second electrode includes one edge second blank area, and at least one of the n second tabs is disposed on the edge second blank area.

In a possible structure, the second electrode includes only one second blank area, the second blank area is an edge second blank area, and the n second tabs are all disposed on the edge second blank area. The at least one first blank area on the first electrode

includes $i_2$ non-edge first blank areas, and the m first tabs are disposed on the $i_2$ non-edge first blank areas.

For example, the second electrode may have a structure that is shown in (a) in FIG. 12 and in which two tabs are disposed on the edge, and the first electrode may have the structure that is shown in (a1) in FIG. 2A and FIG. 2B and (a2) in FIG. 2A and FIG. 2B and in which two tabs are disposed in the middle. A charging/discharging port of an included electrochemical cell with four tabs may be shown in (a) in FIG. 3A-1 and FIG. 3A-2. A charging/discharging circuit including the electrochemical cell with four tabs may be any of the charging/discharging circuits shown in (b) in FIG. 3A-1 and FIG. 3A-2, (a) in FIG. 3B-1 to FIG. 3B-4, (b) in FIG. 3B-1 to FIG. 3B-4, (c) in FIG. 3B-1 to FIG. 3B-4, and (d) in FIG. 3B-1 to FIG. 3B-4.

Alternatively, the second electrode may have a structure that is shown in (a) in FIG. 12 and in which two tabs are disposed on the edge, and the first electrode may have any one of the structure that is shown in (a) in FIG. 4 or (c) in FIG. 7 and in which three tabs are disposed in the middle, the structure that is shown in (b) in FIG. 4 or (b) in FIG. 7 and in which four tabs are disposed in the middle, the structure that is shown in (c) in FIG. 4 and in which one tab is disposed in the middle, and the structure that is shown in (d) in FIG. 4 and in which two tabs are disposed in the middle, or another similar structure. For a diagram of the included charging/discharging port and a diagram of the included charging/discharging link, refer to the foregoing examples.

Alternatively, the second electrode may have a structure that is shown in (b) in FIG. 12 and in which one tab is disposed on the edge, or another similar structure in which a tab is disposed on the edge. The first electrode may have any one of the structure that is shown in (a1) in FIG. 2A and FIG. 2B and (a2) in FIG. 2A and FIG. 2B, or (d) in FIG. 4 and in which two tabs are disposed in the middle, the structure that is shown in (a) in FIG. 4 or (c) in FIG. 7 and in which three tabs are disposed in the middle, and the structure that is shown in (b) in FIG. 4 or (b) in FIG. 7 and in which four tabs are disposed in the middle, or another similar structure in which a tab is disposed in the middle. For a diagram of the included charging/discharging port and a diagram of the included charging/discharging link, refer to the foregoing examples.

Alternatively, the second electrode may have a structure that is shown in (c) in FIG. 12 and in which three tabs are disposed on the edge, or another similar structure in which a tab is disposed on the edge. The first electrode may have any one of the structure that is shown in (a1) in FIG. 2A and FIG. 2B and (a2) in FIG. 2A and FIG. 2B, or (d) in FIG. 4 and in which two tabs are disposed in the middle, the structure that is shown in (a) in FIG. 4 or (c) in FIG. 7 and in which three tabs are disposed in the middle, the structure that is shown in (b) in FIG. 4 or (b) in FIG. 7 and in which four tabs are disposed in the middle, and the structure that is shown in (c) in FIG. 4 and in which one tab is disposed in the middle, or another similar structure in which a tab is disposed in the middle. For a diagram of the included charging/discharging port and a diagram of the included charging/discharging link, refer to the foregoing examples.

In another possible structure, the second electrode includes at least one edge second blank area and at least one non-edge second blank area, at least one of the n second tabs is disposed on the at least one edge second blank area, and at least one of the n second tabs is disposed on the at least one non-edge second blank area. The at least one first blank area on the first electrode includes $i_2$ non-edge first blank areas, and the m first tabs are disposed on the $i_2$ non-edge first blank areas.

For example, the second electrode may have a structure that is shown in (a) in FIG. 13 and in which two tabs are disposed in the middle and two tabs are disposed on the edge, and the first electrode may have the structure that is shown in (a) in FIG. 4 and in which three tabs are disposed in the middle. A charging/discharging port of an included electrochemical cell with seven tabs may be shown in (f) in FIG. 9A and FIG. 9B. A charging/discharging circuit including the electrochemical cell with seven tabs may be shown in (b) in FIG. 8A and FIG. 8B.

Alternatively, the second electrode may have a structure that is shown in (a) in FIG. 13 and in which two tabs are disposed in the middle and two tabs are disposed on the edge, and the first electrode may have any one of the structure that is shown in (b) in FIG. 4 or (b) in FIG. 7 and in which four tabs are disposed in the middle, the structure that is shown in (c) in FIG. 4 and in which two tabs are disposed in the middle, the structure that is shown in (a) in FIG. 7 and in which six tabs are disposed in the middle, and the structure that is shown in (c) in FIG. 7 and in which three tabs are disposed in the middle, or another similar structure in which a tab is disposed in the middle. For a diagram of the included charging/discharging port and a diagram of the included charging/discharging link, refer to the foregoing examples.

Alternatively, the second electrode may have a structure that is shown in (b) in FIG. 13 and in which two tabs are disposed in the middle and one tab is disposed on the edge, a structure that is shown in (c) in FIG. 13 and in which one tab is disposed in the middle and two tabs are disposed on the edge, or another similar structure in which a tab is disposed in the middle and a tab is disposed on the edge. The first electrode may have any one of the structure that is shown in (a1) in FIG. 2A and FIG. 2B and (a2) in FIG. 2A and FIG. 2B, or (d) in FIG. 4 and in which two tabs are disposed in the middle, the structure that is shown in (a) in FIG. 4 or (c) in FIG. 7 and in which three tabs are disposed in the middle, the structure that is shown in (b) in FIG. 4 or (b) in FIG. 7 and in which four tabs are disposed in the middle, and the structure that is shown in (c) in FIG. 4 and in which one tab is disposed in the middle, or another similar structure in which a tab is disposed in the middle. For a diagram of the included charging/discharging port and a diagram of the included charging/discharging link, refer to the foregoing examples.

It should be noted that an embodiment of this application further provides a battery including a jelly roll obtained by winding a first electrode with a tab disposed on the edge and a second electrode with a tab disposed on the edge. The first electrode includes at least one edge first blank area, and the m first tabs are disposed on the at least one edge first blank area. The second electrode includes at least one edge second blank area, and the n second tabs are disposed on the at least one edge second blank area. Herein, m and n are positive integers, $m \geq 1$, $n \geq 1$, and m and n are not equal to 1 at the same time.

For example, the first electrode may have a structure that is shown in (a) in FIG. 10 and in which two tabs are disposed on the edge, a structure that is shown in (c) in FIG. 10 and in which three tabs are disposed on the edge, or another similar structure in which a tab is disposed on the edge. The second electrode may have a structure that is shown in (a) in FIG. 12 and in which two tabs are disposed on the edge, a structure that is shown in (b) in FIG. 12 and in which one tab is disposed on the edge, a structure that is shown in (c) in FIG. 12 and in which three tabs are disposed on the edge, or another similar structure in which a tab is disposed on the edge.

Alternatively, the first electrode may have a structure that is shown in (b) in FIG. 10 and in which one tab is disposed on the edge, a structure that is shown in (a) in FIG. 12 and in which two tabs are disposed on the edge, a structure that is shown in (c) in FIG. 12 and in which three tabs are disposed on the edge, or another similar structure in which a tab is disposed on the edge.

It may be understood that the battery that includes the jelly roll obtained by winding the first electrode with a tab disposed on the edge and the second electrode with a tab disposed on the edge includes at least three tabs. The at least three tabs may form at least two ports for charging and/or discharging, to reduce heat dissipation pressure of high-current charging on a single link, improve charging efficiency of the battery, and support a stronger fast charging capability of the battery.

Further, in embodiments of this application, if two ends of a tab protrude from two sides of a width of an electrode, there may be two tabs. For example, as shown in FIG. 14, two ends of a first tab 1401 protrude from two sides of a width of the first electrode. In this case, the first electrode may be understood as an electrode with two tabs that includes a first tab 1401-1 and a first tab 1401-2. A second tab and each of the first tab 1401-1 and the first tab 1401-2 may form a charging/discharging port.

Optionally, in embodiments of this application, a separation layer may be further disposed on a first bending area of the first electrode. The separation layer is used to reduce a risk of lithium plating and shading generated by an inner-ring electrode.

The first bending area of the first electrode is a position close to a center of the jelly roll that is bent first when the first electrode and the second electrode are wound. As shown in (b) in FIG. 15, 1502 shows the first bending area of the first electrode.

For example, the separation layer may be PET tape, and the PET tape may be disposed on the first bending area of the first electrode in a pasting manner. As shown in (a) in FIG. 15, PET tape 1502 is disposed on the first electrode. When the electrochemical cell is obtained by winding the first electrode and the second electrode, the PET tape 1502 pasted on a first bending area 1501 of the first electrode can effectively reduce a risk of lithium plating and shading that may be generated by an inner-ring electrode.

Further, an embodiment of this application further provides an electrode winding method. An occasion at which the second electrode is inserted into the first electrode may be determined based on specific structures of the first electrode and the second electrode provided in embodiments of this application.

FIG. 16 is a schematic diagram of an electrode winding process by using an example in which the jelly roll shown in (c) in FIG. 2A and FIG. 2B is obtained by winding the first electrode shown in (a1) in FIG. 2A and FIG. 2B and (a2) in FIG. 2A and FIG. 2B and the second electrode shown in (b1) in FIG. 2A and FIG. 2B and (b2) in FIG. 2A and FIG. 2B. As shown in FIG. 16, the electrode winding process may mainly include the following steps: S1: Bend the second electrode, the first separator 207-1, and the second separator 207-2 for the first time by using a winding core 1601, to form a first bending area 1602 of the second electrode.

S2: Insert the first electrode into the first bending area 1602 of the second electrode.

S3: Subsequently wind the second electrode, the first electrode, and the separator, and take out the winding core 1601 after the winding is completed.

It should be noted that embodiments of this application provide a full set of solutions from dimensions such as an electrode structure design, an electrode winding method, and charging system optimization, to comprehensively improve a fast charging capability of a battery, and reduce negative impact of fast charging on the battery. FIG. 16 merely shows the electrode winding method by using the jelly roll shown in (c) in FIG. 2A and FIG. 2B as an example. For a method for winding a first electrode and a second electrode of another structure, refer to the winding method shown in FIG. 16. Details are not described in embodiments of this application.

It may be understood that an embodiment of this application further provides a terminal device. The terminal device includes a multi-tab battery of any one of the foregoing possible structures in embodiments of this application. The terminal device further includes at least two connection circuits, at least two protection circuits, and at least two buck circuits.

For example, the terminal device provided in embodiments of this application may be a desktop device, a laptop device, a handheld device, a wearable device, a smart home device, a computing device, or a vehicle-mounted device. For example, the terminal device may be a netbook, a tablet computer, a smart watch, an ultra-mobile personal computer (ultra-mobile personal computer, UMPC), a smart camera, a netbook, a personal digital assistant (personal digital assistant, PDA), a portable multimedia player (portable multimedia player, PMP), an AR (augmented reality)/VR (virtual reality) device, a wireless device on aircrafts, a wireless device on robots, a wireless device in industrial control, a wireless device in telemedicine, a wireless device in smart grid, a wireless device in smart city (smart city), or a wireless device in smart home (smart home). Alternatively, the user equipment may be a wireless device or the like in a narrowband (narrowband, NB) technology.

The terminal device includes a communications interface, a processor, a memory, and at least two battery connectors. The communications interface also functions as a charging interface. The at least two battery connectors are connected to a multi-tab battery. The multi-tab battery includes at least two groups of ports respectively connected to the at least two battery connectors, and each group of ports includes a first tab and a second tab. The multi-tab battery obtains a direct current from a power adapter through the communications interface of the terminal device, and performs charging. Specifically, when detecting that the power adapter is electrically connected to the terminal device, the terminal device completes charging by using any one or more of the at least two groups of ports. When detecting that a load of the terminal device has a power supply requirement, the terminal device supplies power to the load by using any one or more of the at least two groups of ports. The load of the terminal device may be a touchscreen, a speaker, a vibration motor, or the like.

FIG. 17 describes a hardware structure of a terminal device by using a mobile phone as an example. As shown in FIG. 17, the mobile phone includes a mainboard 1710, an interface sub-board 1720, a multi-tab battery 1730, and a communications interface 1740. The communications interface is located on the interface sub-board 1720. A first battery connector 1750 connected to a first port of the multi-tab battery is disposed on the mainboard. A second battery connector 1740 connected to a second port of the multi-tab battery is disposed on the interface sub-board 1720. When the mobile phone detects that the power adapter is electrically connected to the mobile phone, the mobile phone completes charging of the multi-tab battery. When the mobile phone detects that the load of the mobile phone has a power supply requirement, the mobile phone completes discharging of the multi-tab battery. The mobile phone may complete charging or discharging through both the first port and the second port, or may separately complete charging and discharging through the first port and the second port, or may complete charging and discharging in another manner. This is not limited in embodiments of this application.

The mobile phone may further include a camera (a front-facing camera and/or a rear-facing camera), a flash, a micro projection apparatus, a near field communication (NFC) apparatus, a sensor, a radio frequency module, an antenna, and the like that are not shown in FIG. 17. Details are not described herein.

It should be understood that the mobile phone including the multi-tab battery that has the two ports is merely used as an example in FIG. 17. A specific structure of the terminal device is not limited in embodiments of this application. Actually, the terminal device may further include another hardware module that has an interaction relationship with the hardware module shown in FIG. 17. This is not specifically limited herein.

## Claims

1. A battery, wherein the battery comprises a multi-tab electrochemical cell, and the multi-tab electrochemical cell is obtained by winding a first electrode, a second electrode, and a separator used to separate the first electrode from the second electrode;

   the first electrode comprises at least one first blank area, and m first tabs are disposed on the at least one first blank area; the second electrode comprises at least one second blank area, and n second tabs are disposed on the at least one second blank area; and m and n are positive integers, $m \geq 1$, $n \geq 1$, and m and n are not equal to 1 at the same time;
   the at least one first blank area and the at least one second blank area each comprise at least one non-edge blank area;
   at least two tabs are disposed on at least one of the at least one first blank area and the at least one second blank area, at least one of the at least two tabs protrudes from a first side of a corresponding electrode, and at least one of the at least two tabs protrudes from a second side of the corresponding electrode; and the first side is a first long side of the corresponding electrode, and the second side is a second long side of the corresponding electrode; and
   the blank area is an area in which a current collector is not coated with an electrode material.

2. The battery according to claim 1, wherein the at least one first blank area comprises $i_1$ non-edge first blank areas, and the m first tabs are disposed on the $i_1$ non-edge first blank areas;

   the at least one second blank area comprises $j_1$ non-edge second blank areas, and the n second tabs are disposed on the $j_1$ non-edge second blank areas; and

$i_1$ and $j_1$ are positive integers.

3. The battery according to claim 1, wherein the at least one first blank area comprises $i_2$ non-edge first blank areas, the m first tabs are disposed on the $i_2$ non-edge first blank areas, and $i_2$ is a positive integer; and the at least one second blank area comprises one edge second blank area, and at least one of the n second tabs is disposed on the edge second blank area.

4. The battery according to claim 1, wherein the at least one first blank area comprises one edge first blank area, and at least one of the m first tabs is disposed on the edge first blank area; and the at least one second blank area comprises $j_2$ non-edge second blank areas, the n second tabs are disposed on the $j_2$ non-edge second blank areas, and $j_2$ is a positive integer.

5. The battery according to any one of claims 1 to 4, wherein the non-edge blank area is disposed between double-sided areas, or between a double-sided area and a single-sided area, or between single-sided areas;

   the edge blank area is disposed next to a first short side of the electrode or a second short side of the electrode; and
   the single-sided area is an area in which one side of the current collector is coated with the electrode material, and the double-sided area is an area in which both sides of the current collector are coated with the electrode material.

6. The method according to any one of claims 1 to 5, wherein the first electrode is an anode electrode, and the second electrode is a cathode electrode.

7. The battery according to any one of claims 1, 2, and 4 to 6, wherein the second electrode comprises no edge second blank area or single-sided area.

8. The battery according to any one of claims 1 to 7, wherein a separation layer is disposed inside a first bending area of the first electrode, the separation layer is used to prevent lithium plating, and the first bending area of the first electrode is a position close to a center of the battery that is bent first when the first electrode and the second electrode are wound.

9. The battery according to claim 8, wherein the separation layer is PET tape.

10. An electrode winding method, wherein the method comprises:

    bending a second electrode and a separator for the first time to form a first bending area of the second electrode (S1);
    inserting a first electrode into the first bending area of the second electrode (S2); and
    winding the second electrode, the first electrode, and the separator (S3), wherein
    the first electrode comprises at least one first blank area, and m first tabs are disposed on the at least one first blank area; the first electrode comprises at least one second blank area, and n second tabs are disposed on the at least one second blank area; and m and n are positive integers, m ≥ 1, n ≥ 1, and m and n are not equal to 1 at the same time;
    the at least one first blank area and the at least one second blank area each comprise at least one non-edge blank area;
    at least two tabs are disposed on at least one of the at least one first blank area and the at least one second blank area, at least one of the at least two tabs protrudes from a first side of a corresponding electrode, and at least one of the at least two tabs protrudes from a second side of the corresponding electrode; and the first side is a first long side of the corresponding electrode, and the second side is a second long side of the corresponding electrode; and
    the blank area is an area in which a current collector is not coated with an electrode material.

11. The method according to claim 10, wherein the first electrode and the second electrode have the structure according to any one of claims 2 to 9.

12. A terminal device, wherein the terminal device comprises the battery according to any one of claims 1 to 9.

13. The terminal device according to claim 12, wherein the battery comprises at least two ports, and each port comprises at least one first tab and at least one second tab.

14. The terminal device according to claim 13, wherein the terminal device comprises at least two charging/discharging links.

15. The terminal device according to claim 14, wherein each charging/discharging link comprises at least one port, one battery protection circuit, and one battery connection circuit.

16. The terminal device according to claim 15, wherein at least one of the at least two charging/discharging links further comprises one buck circuit.

Double-sided area

First tab

Blank area

(a)

Double-sided area          Single-sided area

Second tab

Blank area

(b)

Separator

First
electrode
material

Second
electrode
material

-------- Separator

(c)
~
TO
FIG. 1B

FIG. 1A

CONT.
FROM
FIG. 1A
~

(d)

FIG. 1B

FIG. 2A

CONT.
FROM
FIG. 2A

201a      202a      201b      200a

200b   205a   204a   206-1a   203b   201b   204-1a   203a   207-2 207-1
                           (206-1b)                    (204-1b)

▨   First electrode material     ▧   Second electrode material     - - - - - -   Separator

(c)

FIG. 2B

21

300

Port 1

| − | + |

**Electrochemical cell
(with four tabs)**

Port 2

| − | + |

(a)

~
TO
FIG. 3A-2

FIG. 3A-1

CONT.
FROM
FIG. 3A-1

Second battery connection circuit

$I_5$

$I_5$

300

First battery connection circuit

Level-2 buck circuit 1

$I_4$

$I_2$

Load

$I_8$

Mainboard circuit + Level-2 buck circuit 2

Second protection circuit

Port 2

Electrochemical cell (with four tabs)

$I_6$

$I_4$

$I_7$

Port 1

First protection circuit

Sub-board circuit + Level-1 buck circuit

Charging interface

$I_0$

$I_1$

FPC

$I_3$

◄───── Charging current path    ◄------- Discharging current path

(b)

FIG. 3A-2

(a)

~
TO
FIG. 3B-2

FIG. 3B-1

Second battery connection circuit

Mainboard circuit + Buck circuit 2

Load

Second protection circuit

Port 2

300

**Electrochemical cell (with four tabs)**

Port 1

First battery connection circuit

First protection circuit

Sub-board circuit + Buck circuit 1

Charging interface

FPC

(b)
~
TO
FIG. 3B-3

FIG. 3B-2

Load

Mainboard circuit

Second battery connection circuit

Second protection circuit

Port 2

300

Electrochemical cell (with four tabs)

Port 1

First battery connection circuit

First protection circuit

First sub-board circuit

Buck circuit

Charging interface

FPC

Second sub-board circuit

(c)
~

FIG. 3B-3

EP 4 068 495 A1

CONT.
FROM
FIG. 3B-3

First charging interface

First sub-board circuit

First battery connection circuit

First protection circuit

Port 1

Electrochemical cell (with four tabs)

300

Port 2

Second protection circuit

Second battery connection circuit

Mainboard circuit

Second charging interface

Load

Charging current path

(d)

Discharging current path

FIG. 3B-4

27

(a)

(b)

(c)

(d)

▨▨▨▨▨  First electrode material

FIG. 4

(a)

(b)

(c)

(d)

▨▨▨▨▨ Second electrode material

FIG. 5

(a)

(b)

(c)

▨▨▨▨▨ Second electrode material

FIG. 6

(a)

(b)

First electrode material

(c)

FIG. 7

Port 1　　　Port 2

| + | − | + | − |

**Electrochemical cell
(with eight tabs)**

| + | − | + | − |

Port 3　　　Port 4

(a)

⟶ Charging current path direction

----⟶ Discharging current path direction

~
TO
FIG. 8B

FIG. 8A

CONT. FROM FIG. 8A

FIG. 8B

(b)

Port 1  Port 2      Port 3

− + −      + −

Port 4  Port 5    Port 6

(a)

Port 1

+      −

→ Port 2

+

(b)

Port 1  Port 2

+  −      +

Port 3 ←      → Port 4

−      −

(c)

Port 1

−      +

→ Port 2

−

(d)

$\sim$
TO
FIG. 9B

FIG. 9A

CONT.
FROM
FIG. 9A

Port 1    Port 2

| + | − | + |

| − | + | − |

Port 3    Port 4

(e)

Port 1    Port 2

| + | − | + |

| − | + | + | − |

Port 3    Port 4

(f)

FIG. 9B

(a)

(b)

(c)

▨▨▨▨▨ First electrode material

FIG. 10

(a)

(b)

(c)

First electrode material

FIG. 11

(a)

(b)

(c)

▨▨▨▨▨ Second electrode material

FIG. 12

(a)

(b)

(c)

▨▨▨▨▨▨▨ Second electrode material

FIG. 13

1401-1

1401 1401-2

▦▦▦▦▦▦ First electrode material

FIG. 14

1501

(a)

1501

1502

First electrode material    Second electrode material    - - - - - - - Separator

(b)

FIG. 15

207-2

207-1

1601

Step (1)　　　　Step (2)　　　　Step (3)

1602

First
electrode　　　Second
electrode　　　--------- Separator

FIG. 16

FIG. 17

<div align="center">**INTERNATIONAL SEARCH REPORT**</div>

| International application No. |
| --- |
| **PCT/CN2020/130899** |

**A. CLASSIFICATION OF SUBJECT MATTER**

H01M 50/547(2021.01)i; H02J 7/00(2006.01)i

According to International Patent Classification (IPC) or to both national classification and IPC

**B. FIELDS SEARCHED**

Minimum documentation searched (classification system followed by classification symbols)

H01M; H02J

Documentation searched other than minimum documentation to the extent that such documents are included in the fields searched

Electronic data base consulted during the international search (name of data base and, where practicable, search terms used)

DWPI, SIPOABS, CNKI, CNABS, CNTXT: 华为, 多, 二, 双, 三, 四, 五, 六, 极耳, 端子, 卷绕, 充电, 线路, 链路, 回路, Huawei, multiple, two, double, three, four, five, six, tabs, terminal, winding, charg+, recharg+, circuit

**C. DOCUMENTS CONSIDERED TO BE RELEVANT**

| Category* | Citation of document, with indication, where appropriate, of the relevant passages | Relevant to claim No. |
| --- | --- | --- |
| X | CN 107666006 A (HUAWEI TECHNOLOGIES CO., LTD.) 06 February 2018 (2018-02-06) description, paragraphs [0005]-[0065] and figures 3-8 | 1-16 |
| X | CN 205303608 U (LETV MOBILE INTELLIGENT INFORMATION TECHNOLOGY (BEIJING) CO., LTD.) 08 June 2016 (2016-06-08) description, paragraphs [0002]-[0044] and figures 2-5 | 1-16 |
| X | CN 109904511 A (LIU, Haiyun) 18 June 2019 (2019-06-18) description, paragraphs [0002]-[0237], [0270], [0286] and figures 2-6, 26, 31 | 1-13 |
| Y | CN 109904511 A (LIU, Haiyun) 18 June 2019 (2019-06-18) description, paragraphs [0002]-[0237], [0270], [0286] and figures 2-6, 26, 31 | 14-16 |
| X | CN 108598354 A (DONGGUAN TAFEL NEW ENERGY TECHNOLOGY CO., LTD. et al.) 28 September 2018 (2018-09-28) description, paragraphs [0004]-[0050] and figures 1, 2, 6-8 | 1-13 |
| Y | CN 108598354 A (DONGGUAN TAFEL NEW ENERGY TECHNOLOGY CO., LTD. et al.) 28 September 2018 (2018-09-28) description, paragraphs [0004]-[0050] and figures 1, 2, 6-8 | 14-16 |
| X | JP 2000106167 A (MITSUBISHI ELECTRIC CORP.) 11 April 2000 (2000-04-11) description, paragraphs [0002]-[0024] and figures 1-7 | 1-13 |

☑ Further documents are listed in the continuation of Box C. ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **29 January 2021** | **25 February 2021** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**EP 4 068 495 A1**

**INTERNATIONAL SEARCH REPORT**

| International application No. |
|---|
| **PCT/CN2020/130899** |

**C.    DOCUMENTS CONSIDERED TO BE RELEVANT**

| Category* | Citation of document, with indication, where appropriate, of the relevant passages | Relevant to claim No. |
|---|---|---|
| Y | JP 2000106167 A (MITSUBISHI ELECTRIC CORP.) 11 April 2000 (2000-04-11)<br>  description, paragraphs [0002]-[0024] and figures 1-7 | 14-16 |
| Y | CN 108091808 A (BEIJING XIAOMI MOBILE SOFTWARE CO., LTD.) 29 May 2018<br>(2018-05-29)<br>  description, paragraphs [0090]-[0132] and figures 3-8 | 14-16 |
| Y | CN 108091809 A (BEIJING XIAOMI MOBILE SOFTWARE CO., LTD.) 29 May 2018<br>(2018-05-29)<br>  description, paragraphs [0090]-[0132] and figures 3-8 | 14-16 |
| A | CN 101414753 A (INVENTEC APPLIANCES (JIANGNING) CORPORATION) 22 April<br>2009 (2009-04-22)<br>  entire document | 1-16 |

Form PCT/ISA/210 (second sheet) (January 2015)

**INTERNATIONAL SEARCH REPORT**
Information on patent family members

International application No.

**PCT/CN2020/130899**

| Patent document cited in search report | | | Publication date (day/month/year) | Patent family member(s) | | | Publication date (day/month/year) |
|---|---|---|---|---|---|---|---|
| CN | 107666006 | A | 06 February 2018 | None | | | |
| CN | 205303608 | U | 08 June 2016 | None | | | |
| CN | 109904511 | A | 18 June 2019 | None | | | |
| CN | 108598354 | A | 28 September 2018 | CN | 208352420 | U | 08 January 2019 |
| JP | 2000106167 | A | 11 April 2000 | None | | | |
| CN | 108091808 | A | 29 May 2018 | None | | | |
| CN | 108091809 | A | 29 May 2018 | None | | | |
| CN | 101414753 | A | 22 April 2009 | None | | | |

Form PCT/ISA/210 (patent family annex) (January 2015)

**EP 4 068 495 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201911359846